(19)

Europäisches
Patentamt
European
Patent Office
Office européen
des brevets

(11) **EP 3 920 275 A1**

(12) **EUROPEAN PATENT APPLICATION**
published in accordance with Art. 153(4) EPC

(43) Date of publication:
**08.12.2021 Bulletin 2021/49**

(21) Application number: **20727134.7**

(22) Date of filing: **17.01.2020**

(51) Int Cl.:
*H01M 4/131* (2010.01)     *H01M 4/36* (2006.01)
*H01M 4/505* (2010.01)     *H01M 4/525* (2010.01)
*H01M 4/62* (2006.01)     *H01M 10/052* (2010.01)
*H01M 10/0562* (2010.01)     *H01M 10/0565* (2010.01)
*H01M 10/0585* (2010.01)

(86) International application number:
**PCT/JP2020/001480**

(87) International publication number:
**WO 2020/202708 (08.10.2020 Gazette 2020/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.03.2019 JP 2019066770**

(71) Applicant: **Sumitomo Chemical Company, Ltd
Chuo-ku,
Tokyo 104-8260 (JP)**

(72) Inventors:
• **KADOWAKI Takuya**
**Niihama-shi**
**Ehime**
**7928521 (JP)**
• **KAWAKAMI Yoshitaka**
**Niihama-shi**
**Ehime**
**7928521 (JP)**

(74) Representative: **Vossius & Partner
Patentanwälte Rechtsanwälte mbB
Siebertstrasse 3
81675 München (DE)**

(54) **POSITIVE ELECTRODE ACTIVE MATERIAL FOR ALL-SOLID-STATE LITHIUM ION BATTERIES, ELECTRODE AND ALL-SOLID-STATE LITHIUM ION BATTERY**

(57) A positive electrode active material for an all-solid-state lithium-ion battery is provided which includes particles including crystals of a lithium metal composite oxide, in which the lithium metal composite oxide has a layered structure and includes Li and a transition metal, the particles are formed so that a relational expression $(D90—D10)/D50 \geq 0.90$ holds with respect to D10, D50, and D90 obtained from a cumulative particle size distribution based on a volume measured through a laser diffraction type particle size distribution measurement, and the crystals are formed so that a ratio $\alpha/\beta$ between a crystallite size $\alpha$ at a peak in the range of $2\theta=18.7\pm2°$ and a crystallite size $\beta$ at a peak in the range of $2\theta=44.6\pm2°$ is 1.0 or more in an X-ray diffraction measurement using CuKa radiation.

FIG. 1

EP 3 920 275 A1

**Description**

Technical Field

The present invention relates to a positive electrode active material for an all-solid-state lithium-ion battery, an electrode, and an all-solid-state lithium-ion battery.
Priority is claimed on Japanese Patent Application No. 2019-066770, filed March 29, 2019, the content of which is incorporated herein by reference.

Background Art

Research on lithium-ion secondary batteries has been actively conducted for applications such as driving power supplies for electric vehicles and home storage batteries. All-solid-state lithium-ion secondary batteries have advantages such as a higher energy density, a wider operation temperature range, and less deterioration than conventional lithium-ion secondary batteries using electrolytic solutions. For this reason, all-solid-state lithium-ion secondary batteries are attracting attention as nextgeneration energy storage devices.
In the following description, in order to distinguish "conventional lithium-ion secondary batteries using electrolytic solutions" from all-solid-state lithium-ion secondary batteries, the "conventional lithium-ion secondary batteries using electrolytic solutions" may be referred to as "liquid-based lithium-ion secondary batteries" in some cases.
Patent Literature 1 describes an all-solid-state lithium-ion secondary battery using $LiNi_{1/3}Mn_{1/3}Co_{1/3}O_2$ as a positive electrode active material. $LiNi_{1/3}Mm_{1/3}Co_{1/3}O_2$ is a well-known material as a positive electrode active material for a liquid-based lithium-ion secondary battery.

Citation List

Patent Literature

[PTL 1]
Japanese Unexamined Patent Application, First Publication No. 2018-014317

Summary of Invention

Technical Problem

In a positive electrode of an all-solid-state lithium-ion secondary battery, lithium ions are exchanged between a positive electrode active material and a solid electrolyte. In the study of all-solid-state lithium-ion secondary batteries, there is a demand for a positive electrode active material capable of smoothly performing the above exchanging of lithium ions and improving battery performance.
In the study of all-solid-state lithium-ion secondary batteries, since the findings of studies on conventional liquid-based lithium-ion secondary batteries may not be able to be utilized in some cases, studies specific to all-solid-state lithium-ion secondary batteries are required.
The present invention was made in order to such circumstances, and an object of the present invention is to provide a positive electrode active material for an all-solid-state lithium-ion battery capable of smoothly performing exchanging of lithium ions between a positive electrode and a solid electrolyte and improving battery performance. Furthermore, another object of the present invention is to provide an electrode and an all-solid-state lithium-ion battery having such a positive electrode active material for an all-solid-state lithium-ion battery.

Solution to Problem

In order to achieve the above objects, the present invention includes the following aspects.
[1] A positive electrode active material for an all-solid-state lithium-ion battery includes particles including crystals of a lithium metal composite oxide. The lithium metal composite oxide has a layered structure and includes at least Li and a transition metal, when particle diameters in which a cumulative proportion from a small particle side are 10%, 50%, and 90% with respect to a cumulative particle size distribution based on volume measured through a laser diffraction type particle size distribution measurement are assumed to be D10, D50, and D90, the particles are formed so that a relational expression $(D90—D10)/D50 \geq 0.90$ holds, and the crystals are formed so that a ratio $\alpha/\beta$ between a crystallite size $\alpha$ at a peak in the range of $2\theta=18.7\pm2°$ and a crystallite size $\beta$ at a peak in the range of $2\theta=44.6\pm2°$ is 1.0 or more in an X-ray diffraction measurement using CuKa radiation.

[2] In the positive electrode active material for an all-solid-state lithium-ion battery according to [1], the positive electrode active material for an all-solid-state lithium-ion battery may be used for an all-solid-state lithium-ion battery including an oxide solid electrolyte.

[3] In the positive electrode active material for an all-solid-state lithium-ion battery according to [1] or [2], the transition metal may be at least one selected from the group consisting of Ni, Co, Mn, Ti, Fe, V, and W.

[4] In the positive electrode active material for an all-solid-state lithium-ion battery according to [3], the lithium metal composite oxide may be represented by the following Formula (1): $Li[Li_x(Ni_{(1-y-z-w)}Co_yMn_zM_w)_{1-x}]O_2$ (1) (where M is at least one element selected from the group consisting of Fe, Cu, Ti, Mg, Al, W, B, Mo, Nb, Zn, Sn, Zr, Ga, and V and $-0.10 \le x \le 0.30$, $0 < y \le 0.40$, $0 \le z \le 0.40$, and $0 \le w \le 0.10$ are satisfied).

[5] In the positive electrode active material for an all-solid-state lithium-ion battery according to [4], in the foregoing Formula (1), $1-y-z-w \ge 0.50$ and $y \le 0.30$ may be satisfied.

[6] In the positive electrode active material for an all-solid-state lithium-ion battery according to any one of [1] to [5], the particles may be composed of primary particles, secondary particles formed of an agglomeration of the primary particles, and single particles present independently of the primary particles and the secondary particles, and the content of the single particles in the particles may be 20% or more.

[7] In the positive electrode active material for an all-solid-state lithium-ion battery according to any one of [1] to [6], the particles may have a coated layer of a metal composite oxide on a surface of each of the particles.

[8] An electrode includes: the positive electrode active material for an all-solid-state lithium-ion battery according to any one of [1] to [7].

[9] In the electrode according to [8], the electrode may further include a solid electrolyte.

[10] An all-solid-state lithium-ion battery includes: a positive electrode; a negative electrode; and a solid electrolyte layer disposed between the positive electrode and the negative electrode, wherein the solid electrolyte layer includes a first solid electrolyte, the positive electrode includes a positive electrode active material layer in contact with the solid electrolyte layer and a current collector on which the positive electrode active material layer is laminated, and the positive electrode active material layer includes the positive electrode active material for an all-solid-state lithium-ion battery according to any one of [1] to [7] or the electrode according to [8] or [9].

[11] In the all-solid-state lithium-ion battery according to [10], the positive electrode active material layer may include the positive electrode active material for an all-solid-state lithium-ion battery and a second solid electrolyte.

[12] In the all-solid-state lithium-ion battery according to [11], the first solid electrolyte and the second solid electrolyte may be formed of the same substance.

[13] In the all-solid-state lithium-ion battery according to any one of [10] to [12], the first solid electrolyte may have a non-crystalline structure.

[14] In the all-solid-state lithium-ion battery according to any one of [10] to [13], the first solid electrolyte may be an oxide solid electrolyte.

Advantageous Effects of Invention

According to the present invention, it is possible to provide a positive electrode active material for an all-solid-state lithium-ion battery capable of smoothly performing exchanging of lithium ions between a positive electrode and a solid electrolyte and improving battery performance. Furthermore, it is possible to provide an electrode and an all-solid-state lithium-ion battery having such a positive electrode active material for an all-solid-state lithium-ion battery.

Brief Description of Drawings

Fig. 1 is a schematic diagram of a crystallite having a crystal structure belonging to a space group R-3m.
Fig. 2 is a schematic diagram illustrating a laminate included in an all-solid-state lithium-ion battery in an embodiment.
Fig. 3 is a schematic diagram illustrating an overall constitution of the all-solid-state lithium-ion battery in the embodiment.

Description of Embodiments

<Positive Electrode Active Material for All-Solid-State Lithium-Ion Battery>

The positive electrode active material for an all-solid-state lithium-ion battery in this embodiment includes particles containing crystals of a lithium metal composite oxide.

In a case in which a coated layer formed of a metal composite oxide to be described later is provided on surfaces composed of particles of a lithium metal composite oxide, the particles of the lithium metal composite oxide having the coated layer correspond to "particles containing crystals of a lithium metal composite oxide" related to an aspect of the present invention.

In a case in which a coated layer formed of a metal composite oxide is not provided on surfaces composed of particles of a lithium metal composite oxide, the particles of the lithium metal composite oxide correspond to "particles containing crystals of a lithium metal composite oxide" related to an aspect of the present invention.

The positive electrode active material for an all-solid-state lithium-ion battery in this embodiment is a positive electrode active material used for an all-solid-state lithium-ion battery including an oxide solid electrolyte.

Hereinafter, the positive electrode active material for an all-solid-state lithium-ion battery in this embodiment may be simply referred to as a "positive electrode active material" in some cases.

The positive electrode active material in this embodiment satisfies the following requirements.

(Requirement 1) The lithium metal composite oxide included in the positive electrode active material includes a layered structure and includes at least Li and a transition metal.

(Requirement 2) In the particles, with regard to a cumulative particle size distribution measured using a laser diffraction type particle size distribution measurement, when particle diameters at which a cumulative proportion from a small particle side are 10%, 50%, and 90% are assumed to be D10, D50, and D90, a relational expression (D90—D10)/D50>0.90 holds.

(Requirement 3) In the crystals, in an X-ray diffraction measurement using CuKa radiation, a ratio $\alpha/\beta$ between a crystallite size $\alpha$ in a peak in the range of $2\theta=18.7\pm2°$ and a crystallite size $\beta$ in a peak in the range of $2\theta=44.6\pm2°$ is 1.0 or more.

A description will be provided in the following order.

(Requirement 1: Lithium Metal Composite Oxide)

The lithium metal composite oxide included in the positive electrode active material in this embodiment contains at least one selected from the group consisting of Ni, Co, Mn, Ti, Fe, V, and W as a transition metal.

When the lithium metal composite oxide included in the positive electrode active material in this embodiment includes at least one selected from the group consisting of Ni, Co, and Mn as a transition metal, the obtained lithium metal composite oxide forms a stable crystal structure from/to which Li ions are able to be removed or inserted. For this reason, in a case in which the positive electrode active material in this embodiment is used for a positive electrode of a secondary battery, a high initial charge and discharge efficiency is obtained. A method for measuring initial charge and discharge efficiency will be described later.

When the lithium metal composite oxide included in the positive electrode active material in this embodiment includes at least one selected from the group consisting of Ti, Fe, V, and W, a crystal structure of the obtained lithium metal composite oxide is strong. For this reason, the positive electrode active material in this embodiment is a positive electrode active material having a high thermal stability. Furthermore, the positive electrode active material in this embodiment has improved cycle characteristics.

To be more specific, the lithium metal composite oxide is represented by the following Composition Formula (1):

$$Li[Li_x(Ni_{(1-y-z-w)}Co_yMn_zM_w)_{1-x}]O_2 \qquad (1)$$

(here, M is one or more elements selected from the group consisting of Fe, Cu, Ti, Mg, Al, W, B, Mo, Nb, Zn, Sn, Zr, Ga, La, and V and —0.1≤x≤0.30, 0≤y≤0.40, 0≤z≤0.40, and 0≤w≤0.10 are satisfied).

(Regarding x)

In order to obtain a lithium secondary battery (an all-solid-state lithium-ion battery) having excellent cycle characteristics, x in Composition Formula (1) is preferably more than 0, more preferably 0.01 or more, and still more preferably 0.02 or more. Furthermore, in order to obtain an all-solid-state lithium-ion battery having a higher initial coulomb efficiency, x in Composition Formula (1) is preferably 0.25 or less, and more preferably 0.10 or less.

In this specification, the expression "excellent cycle characteristics" means characteristics in which an amount of decrease in battery capacity when charging and discharging are repeatedly performed is small and means that a ratio of a discharge capacity at the time of re-measurement to an initial discharge capacity does not easily decrease.

The all-solid-state lithium-ion battery is charged by applying a negative potential to a positive electrode and a positive potential to a negative electrode through an external power supply.

The all-solid-state lithium-ion battery can also be discharged by connecting a discharge circuit to the positive electrode and the negative electrode of the charged all-solid-state lithium-ion battery and supplying electricity to the discharge circuit. The discharge circuit includes an electronic device, an electric device, and an electric vehicle driven through electric power of the all-solid-state lithium-ion battery.

Furthermore, in this specification, the expression "initial coulomb efficiency" is a value obtained by (initial discharge capacity)/(initial charge capacity)$\times$100 (%)." A secondary battery having a high initial coulomb efficiency has a small irreversible capacity at the time of initial charging and discharging and a capacity per volume and mass relatively easily increases.

It is possible to arbitrarily combine upper limit values and lower limit values of x. In the above Composition Formula (1), x may be -0.10 or more and 0.25 or less or -0.10 or more and 0.10 or less.

x may be more than 0 and 0.30 or less, more than 0 and 0.25 or less, or more than 0 and 0.10 or less.

x may be 0.01 or more and 0.30 or less, 0.01 or more and 0.25 or less, or 0.01 or more and 0.10 or less.

x may be 0.02 or more and 0.3 or less, 0.02 or more and 0.25 or less, or 0.02 or more and 0.10 or less.

In this embodiment, x is preferably $0<x\leq0.30$.

(Regarding y)

In order to obtain a lithium secondary battery having a low internal resistance of the battery, y in the foregoing Composition Formula (1) is preferably more than 0, more preferably 0.005 or more, still more preferably 0.01 or more, and particularly preferably 0.05 or more. Furthermore, in order to obtain a lithium secondary battery having a high thermal stability, y in the foregoing Composition Formula (1) is more preferably 0.35 or less, still more preferably 0.33 or less, and yet more preferably 0.30 or less.

It is possible to arbitrarily combine upper limit values and lower limit values of y. In the following Composition Formula (1), y may be 0 or more and 0.35 or less, 0 or more and 0.33 or less, or 0 or more and 0.30 or less.

y may be more than 0 and 0.40 or less, more than 0 and 0.35 or less, more than 0 and 0.33 or less, or more than 0 and 0.30 or less.

y may be 0.005 or more and 0.40 or less, 0.005 or more and 0.35 or less, 0.005 or more and 0.33 or less, or 0.005 or more and 0.30 or less.

y may be 0.01 or more and 0.40 or less, 0.01 or more and 0.35 or less, 0.01 or more and 0.33 or less, or 0.01 or more and 0.30 or less.

y may be 0.05 or more and 0.40 or less, 0.05 or more and 0.35 or less, 0.05 or more and 0.33 or less, or 0.05 or more and 0.30 or less.

In this embodiment, y is preferably $0<y\leq0.40$.

In this embodiment, in Composition Formula (1), x is more preferably $0<x\leq0.10$ and y is more preferably $0<y\leq0.40$.

(Regarding z)

In order to obtain a lithium secondary battery having excellent cycle characteristics, z in the foregoing Composition Formula (1) is preferably 0.01 or more, more preferably 0.02 or more, and still more preferably 0.1 or more. Furthermore, in order to obtain a lithium secondary battery having a high storage stability at a high temperature (for example, in an environment of 60°C), z in the foregoing Composition Formula (1) is preferably 0.39 or less, more preferably 0.38 or less, and still more preferably 0.35 or less.

It is possible to arbitrarily combine upper limit values and lower limit values of z. In the following Composition Formula (1), z may be 0 or more and 0.39 or less, 0 or more and 0.38 or less, or 0 or more and 0.35 or less.

z may be 0.01 or more and 0.40 or less, 0.01 or more and 0.39 or less, 0.01 or more and 0.38 or less, or 0.01 or more and 0.35 or less.

z may be 0.02 or more and 0.40 or less, 0.02 or more and 0.39 or less, 0.02 or more and 0.38 or less, or 0.02 or more and 0.35 or less.

z may be 0.10 or more and 0.40 or less, 0.10 or more and 0.39 or less, 0.10 or more and 0.38 or less, or 0.10 or more and 0.35 or less.

In this embodiment, z is preferably $0.02\leq z\leq0.35$.

(Regarding w)

In order to obtain a lithium secondary battery having a low internal resistance of the battery, w in the foregoing Composition Formula (1) is preferably more than 0, more preferably 0.0005 or more, and still more preferably 0.001 or more. Furthermore, in order to obtain a lithium secondary battery having a large discharge capacity at a high current rate, w in the foregoing Composition Formula (1) is preferably 0.09 or less, more preferably 0.08 or less, and still more preferably 0.07 or less.

It is possible to arbitrarily combine upper limit values and lower limit values of w. In the following Composition Formula (1), w may be 0 or more and 0.09 or less, 0 or more and 0.08 or less, or 0 or more and 0.07 or less.

w may be more than 0 and 0.10 or less, more than 0 and 0.09 or less, more than 0 and 0.08 or less, or more than 0 and 0.07 or less.

w may be 0.0005 or more and 0.10 or less, 0.0005 or more and 0.09 or less, 0.0005 or more and 0.08 or less, or 0.0005 or more and 0.07 or less.

w may be 0.001 or more and 0.10 or less, 0.001 or more and 0.09 or less, 0.001 or more and 0.08 or less, or 0.001 or more and 0.07 or less.

In this embodiment, w is preferably $0 \leq w \leq 0.07$.

(Regarding y+z+w)

In order to obtain a lithium secondary battery having a large battery capacity, in this embodiment, y+z+w in the foregoing Composition Formula (1) is preferably 0.50 or less, more preferably 0.48 or less, and still more preferably 0.46 or less. Furthermore, y+z+w is preferably 0.07 or more.

That is to say, 1-y-z-w is preferably $0.50 \leq 1-y-z-w \leq 0.97$, more preferably $0.52 \leq 1-y-z-w \leq 0.97$, and still more preferably $0.54 \leq 1-y-z-w \leq 0.97$.

It is desirable that the lithium metal composite oxide included in the positive electrode active material in this embodiment satisfy $0.50 \leq 1-y-z-w \leq 0.97$ and $0 < y \leq 0.30$ in Composition Formula (1). That is to say, it is desirable that the lithium metal composite oxide included in the positive electrode active material in this embodiment include Ni having a content molar ratio of 0.50 or more and Co having a content molar ratio of 0.30 or less in Composition Formula (1).

(Regarding M)

M in the foregoing Composition Formula (1) represents one or more elements selected from the group consisting of Fe, Cu, Ti, Mg, Al, W, B, Mo, Nb, Zn, Sn, Zr, Ga, La, and V.

In order to obtain a lithium secondary battery having excellent cycle characteristics, M in Composition Formula (1) is preferably one or more elements selected from the group consisting of Ti, Mg, Al, W, B, and Zr, and more preferably one or more elements selected from the group consisting of Al and Zr. Furthermore, in order to obtain a lithium secondary battery having a high thermal stability, M is preferably one or more elements selected from the group consisting of Ti, Al, W, B, and Zr.

In an example of a preferable combination of x, y, z, and w described above, x is 0.02 or more and 0.30 or less, y is 0.05 or more and 0.30 or less, z is 0.02 or more and 0.35 or less, and w is 0 or more and 0.07 or less. For example, lithium metal composite oxides in which x=0.05, y=0.20, z=0.30, and w=0 are satisfied, lithium metal composite oxides in which x=0.05, y=0.08, z=0.04, and w=0 are satisfied, and lithium metal composite oxides in which x=0.25, y=0.07, z=0.02, and w=0 are satisfied, can be exemplified.

(Layered Structure)

In this embodiment, a crystal structure of a lithium metal composite oxide is a layered structure. The crystal structure of the lithium metal composite oxide is more preferably a hexagonal crystal structure or a monoclinic crystal structure.

The hexagonal crystal structure belongs to any one space group selected from the group consisting of P3, $P3_1$, $P3_2$, R3, P-3, R-3, P312, P321, $P3_1$12, $P3_1$21, $P3_2$12, $P3_2$21, R32, P3m1, P31m, P3c1, P31c, R3m, R3c, P-31m, P-31c, P-3m1, P-3c1, R-3m, R-3c, P6, $P6_1$, $P6_5$, $P6_2$, $P6_4$, $P6_3$, P-6, P6/m, $P6_3$/m, P622, P6i22, $P6_5$22, $P6_2$22, $P6_4$22, $P6_3$22, P6mm, P6cc, $P6_3$cm, $P6_3$mc, P-6m2, P-6c2, P-62m, P-62c, P6/mmm, P6/mcc, $P6_3$/mcm, and $P6_3$/mmc.

The monoclinic crystal structure belongs to any one space group selected from the group consisting of P2, P2i, C2, Pm, Pc, Cm, Cc, P2/m, P2i/m, C2/m, P2/c, P2i/c, and C2/c.

Among these, in order to obtain a lithium secondary battery having a high discharge capacity, a crystal structure is particularly preferably a hexagonal crystal structure belonging to a space group R-3m or a monoclinic crystal structure belonging to C2/m.

(Requirement 2: Particle Size Distribution)

With regard to requirement 2 described above, a "cumulative particle size distribution base on a volume" can be measured through a measuring method using a laser diffraction scattering method as a measurement principle. A particle size distribution measurement using the laser diffraction scattering method as a measurement principle is referred to as a "laser diffraction type particle size distribution measurement."

To be specific, the cumulative particle size distribution of the positive electrode active material was measured through the following measuring method.

First, a dispersion liquid is obtained by adding 0.1 g of a positive electrode active material to 50 ml of a 0.2 mass% aqueous sodium hexametaphosphate solution and dispersing the positive electrode active material.

Subsequently, a cumulative particle size distribution curve base on a volume is obtained by measuring a particle size distribution of the obtained dispersion solution using a laser diffraction scattering particle size distribution measurement device (for example, Micro Truck MT3300EXII manufactured by MicrotracBEL Corp.). A measurement range of the particle size distribution is 0.02 $\mu$m or more and 2000 $\mu$m or less.

In the obtained cumulative particle size distribution curve, when the total volume is assumed to be 100%, a value of a particle diameter at a point at which a cumulative volume from a fine particle side is 10% is assumed to be a 10% cumulative volume particle size $D_{10}$ (unit: $\mu$m), a value of a particle diameter at a point at which the cumulative volume from the fine particle side is 50% is assumed to be a 50% cumulative volume particle size $D_{50}$ (unit: $\mu$m), and a value of a particle diameter at a point at which the cumulative volume from the fine particle side is 90% is assumed to be a 90% cumulative volume particle size $D_{90}$ (unit: $\mu$m).

In this embodiment, $(D_{90}-D_{10})/D_{50}$ is preferably 0.91 or more, more preferably 1.0 or more, still more preferably 1.2 or more, and further still more preferably 1.5 or more.

In this embodiment, $(D_{90}-D_{10})/D_{50}$ is preferably 11.0 or less, more preferably 10.0 or less, and still more preferably 6.5 or less.

It is possible to arbitrarily combine upper limit values and lower limit values of $(D_{90}-D_{10})/D_{50}$. In this embodiment, $(D_{90}-D_{10})/D_{50}$ may be 0.9 or more and 11.0 or less, 0.9 or more and 10.0 or less, or 0.9 or more and 6.5 or less.

$(D_{90}-D_{10})/D_{50}$ may be 0.91 or more and 11.0 or less, 0.91 or more and 10.0 or less, or 0.91 or more and 6.5 or less.

$(D_{90}-D_{10})/D_{50}$ may be 1.0 or more and 11.0 or less, 1.0 or more and 10.0 or less, or 1.0 or more and 6.5 or less.

$(D_{90}-D_{10})/D_{50}$ may be 1.2 or more and 11.0 or less, 1.2 or more and 10.0 or less, or 1.2 or more and 6.5 or less.

$(D_{90}-D_{10})/D_{50}$ may be 1.5 or more and 11.0 or less, 1.5 or more and 10.0 or less, or 1.5 or more and 6.5 or less.

In order to set $(D_{90}-D_{10})/D_{50}$ in a desired range, a particle size distribution may be prepared by mixing positive electrode active materials of two or more types having different particle diameters.

(Requirement 3: Crystallite Size Ratio)

With regard to Requirement 3 described above, a "crystallite size $\alpha$" and a "crystallite size $\beta$" can be measured using a powder X-ray diffraction measurement using a CuK$\alpha$ radiation.

To be specific, the crystallite size of the lithium metal composite oxide included in the positive electrode active material was measured through the following measuring method.

First, the positive electrode active material in this embodiment is subjected to powder X-ray diffraction measurement using CuK$\alpha$ as a radiation source having a diffraction angle 2$\theta$ in a measurement range of 10° or more and 90° or less. As a result of the measurement, an X-ray diffraction spectrum in which a horizontal axis is 2$\theta$ and a vertical axis is a relative intensity when a maximum peak intensity is 1 among all peaks in the measurement range is obtained.

Subsequently, a peak in the range of 2$\theta$=18.7$\pm$2° and a peak in the range of 2$\theta$=44.6$\pm$2° are determined from the obtained X-ray diffraction spectrum.

Subsequently, a full width at half maximum for each determined peak is calculated.

When the full width at half maximum is calculated, an average value of each intensity at 2$\theta$=10 to 12° is plotted at 2$\theta$=10°, an average value of each intensity at 2$\theta$=88 to 90° is plotted at 2$\theta$=90°, and a straight line connecting the average value plotted at 2$\theta$=10° to the average value plotted at 2$\theta$=90° is set as a base line.

A crystallite size can be calculated by substituting a diffraction angle of a peak and the obtained half-width into the Scherrer equation ($D=K\lambda/B\cos\theta$ (D: crystallite size, K: Scherrer constant, and B: half-width of peak)).

Calculation of a crystallite size from the half-width of a diffraction peak using the Scherrer equation is a conventionally used technique (for example, refer to "X-ray structural analysis-determining arrangement of atoms-" issued on April 30, 2002, 3rd Edition and authored by Yoshio WASEDA and Eiichiro MATSUBARA).

In this embodiment, the specific powder X-ray diffraction measurement of the positive electrode active material is performed using an X-ray diffraction measurement device (for example, X'Pert PRO manufactured by PANalytical).

A powder X-ray diffraction pattern is obtained by filling a dedicated substrate with the obtained positive electrode active material and performing measurement under the conditions of a diffraction angle of 2$\theta$=10° to 90°, a sampling width of 0.02°, and a scan speed of 4°/min using a CuK$\alpha$ radiation source.

Half-widths of a peak A appearing in the range of 2$\theta$=18.7°$\pm$2° and a peak B appearing in the range of 2$\theta$=44.6°$\pm$2° are obtained from the powder X-ray diffraction pattern obtained through the powder X-ray diffraction measurement using a powder X-ray diffraction total pattern analysis software JADE5. A crystallite size $\alpha$ and a crystallite size $\beta$ are calculated through the Scherrer equation using the obtained half-widths.

A crystallite size ratio $\alpha/\beta$ is obtained from the obtained crystallite size $\alpha$ and crystallite size $\beta$.

A case in which the lithium metal composite oxide included in the positive electrode active material in this embodiment is a hexagonal crystal structure belonging to a space group R-3m will be described in more detail below with reference to the drawings as an example.

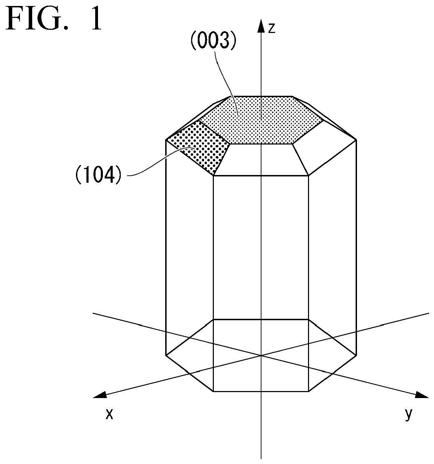

Fig. 1 is a schematic diagram of a crystallite having a crystal structure belonging to a space group R-3m. In the crystallite illustrated in Fig. 1, a crystallite size in a direction perpendicular to that of a 003 plane corresponds to the crystallite size $\alpha$ described above. Furthermore, in the crystallite illustrated in Fig. 1, a crystallite size in a direction perpendicular to that of a 104 plane corresponds to the crystallite size $\beta$. In Fig. 1, the 003 plane is indicated as (003) and the 104 plane is indicated as (104).

When a value of the crystallite size ratio $\alpha/\beta$ is larger than 1, this indicates that the crystallite has grown anisotropically parallel to a z axis in Fig. 1. In addition, when a value of $\alpha/\beta$ approaches 1, this indicates that the crystallite has grown isotropically.

The positive electrode active material in this embodiment has a crystallite size ratio $\alpha/\beta$ of 1.0 or more. That is to say, in the positive electrode active material in this embodiment, the crystallite of the lithium metal composite oxide included in the positive electrode active material has grown anisotropically in a z-axis direction with respect to x axis or y axis in Fig. 1.

In the positive electrode active material in this embodiment, since the lithium metal composite oxide has the anisotropically grown crystallite, battery performance such as a discharge capacity can be improved.

For example, when the crystallite of the lithium metal composite oxide in which the crystallite size ratio $\alpha/\beta$ is 1.0 or more is assumed to be Case 1 and a flat crystallite in which the crystallite has grown anisotropically in a direction parallel to that of an xy plane in Fig. 1 is assumed to be Case 2, the crystallite of Case 1 and the crystallite of Case 2 which have the same volume are compared. In this case, the crystallite of Case 1 has a distance to a center of the crystallite shorter than that of the crystallite of Case 2. For this reason, in the crystallite of Case 1, the movement of Li accompanied by charging and discharging occurs easily.

In this embodiment, $\alpha/\beta$ is preferably 1.2 or more, and more preferably 1.5 or more. Furthermore, $\alpha/\beta$ is preferably 3.0 or less, and more preferably 2.5 or less.

It is possible to arbitrarily combine upper limit values and lower limit values of $\alpha/\beta$. In this embodiment, $\alpha/\beta$ may be 1.0 or more and 3.0 or less, 1.2 or more and 3.0 or less, or 1.5 or more and 3.0 or less.

In this embodiment, $\alpha/\beta$ may be 1.0 or more and 2.5 or less, 1.2 or more and 2.5 or less, or 1.5 or more and 2.5 or less.

In order to obtain a lithium secondary battery having excellent cycle characteristics, a crystallite size $\alpha$ is preferably 400 Å or more and 1200 Å or less, more preferably 1100 Å or less, still more preferably 1000 Å or less, further more preferably 900 Å or less, and particularly preferably 840 Å or less. Furthermore, in order to obtain a lithium secondary battery having a high charge capacity, a crystallite size $\alpha$ is preferably 450 Å or more, and more preferably 500 Å or more.

It is possible to arbitrarily combine upper limit values and lower limit values of $\alpha$. In this embodiment, $\alpha$ may be 400 Å or more and 1100 Å or less, 400 Å or more and 1000 or less, or 400 Å or more and 900 Å or less.

$\alpha$ may be 450 Å or more and 1200 Å or less, 450 Å or more and 1100 Å or less, 450 Å or more and 1000 or less, or 450 Å or more and 900 Å or less.

$\alpha$ may be 500 Å or more and 1200 Å or less, 500 Å or more and 1100 Å or less, 500 Å or more and 1000 or less, or 500 Å or more and 900 Å or less.

In order to obtain a lithium secondary battery having excellent cycle characteristics, a crystallite size $\beta$ is preferably 600 Å or less, more preferably 550 Å or less, still more preferably 500 Å or less, and particularly preferably 450 Å or less. Furthermore, in order to obtain a lithium secondary battery having a high charge capacity, the crystallite size $\beta$ is preferably 200 Å or more, more preferably 250 Å or more, and still more preferably 300 Å or more.

It is possible to arbitrarily combine the upper limit values and the lower limit values of $\beta$ described above. In this embodiment, $\beta$ may be 200 Å or more and 600 Å or less, 200 Å or more and 550 or less, 200 Å or more and 500 Å or less, or 200 Å or more and 450 Å or less.

$\beta$ may be 250 Å or more and 600 Å or less, 250 Å or more and 550 or less, 250 Å or more and 500 Å or less, or 250 Å or more and 450 Å or less.

$\beta$ may be 300 Å or more and 600 Å or less, 300 Å or more and 550 or less, 300 Å or more and 500 Å or less, or 300 Å or more and 450 Å or less.

The inventors found that, some positive electrode active materials show excellent battery performance when used for a positive electrode of a conventional liquid-based lithium-ion secondary battery, however, it show insufficient battery performance when used for a positive electrode of an all-solid-state lithium-ion battery. When the inventors conducted studies on the basis of such knowledge specific to an all-solid-state lithium-ion battery, it was found that, when the positive electrode active material in this embodiment satisfying the above Requirements 1 to 3 is used for the positive electrode of the all-solid-state lithium-ion battery, a high initial charge capacity is measured.

First, when the positive electrode active material in this embodiment satisfies Requirement 1, attachment and detachment of lithium ions are improved.

The positive electrode active material in this embodiment also satisfies Requirement 2. In the positive electrode of the all-solid-state lithium-ion battery, the positive electrode active material exchanges lithium ions between the positive electrode active material and a solid electrolyte. In such an all-solid-state lithium-ion battery, since the positive electrode active material has a wide particle size distribution satisfying Requirement 2, a contact area between the positive electrode active material or the positive electrode active material and the solid electrolyte easily increases. Thus, the positive electrode active material in this embodiment easily exchanges lithium ions between the positive electrode active material and a solid electrolyte when used for the positive electrode of the all-solid-state lithium-ion battery.

In addition, Requirement 3 means that crystals of the lithium metal composite oxide included in the positive electrode active material grow anisotropically in a lamination direction of a layered structure. In the lithium metal composite oxide satisfying Requirement 3, lithium ions are easily attached and detached between layers from a direction intersecting the lamination direction of the layered structure. For this reason, in the positive electrode active material in this embodiment battery performance is easily improved when satisfying Requirement 3.

For this reason, the positive electrode active material in this embodiment satisfying Requirements 1 to 3 can smoothly exchange lithium ions between the positive electrode active material and the solid electrolyte when used for the positive electrode of the all-solid-state lithium-ion battery and improve battery performance.

In this embodiment, it is possible to evaluate the battery performance of the all-solid-state lithium-ion battery through initial charge and discharge efficiency obtained using the following method.

[Manufacturing of All-Solid-State Lithium-Ion Battery]

(Manufacturing of positive electrode active material sheet)

A mixed powder is obtained by mixing a positive electrode active material and $Li_3BO_3$ at a ratio in which a composition of a positive electrode active material:$Li_3BO_3$=80:20 (molar ratio) is satisfied. A resin binder (ethyl cellulose), a plasticizer (dioctyl phthalate), and a solvent (acetone) are added to the obtained mixed powder at a ratio in which a composition of mixed powder: resin binder: plasticizer: solvent=100:10:10:100 (a mass ratio) is satisfied and are mixed together using a planetary stirring and air bubble removal device.

A positive electrode mixture slurry is obtained by defoaming the obtained slurry using the planetary stirring and air bubble removal device.

A positive electrode film with a thickness of 50 $\mu$m is formed by applying the obtained positive electrode mixture slurry onto a PET film using a doctor blade and drying the coated film.

A positive electrode active material sheet with a thickness of 40 $\mu$m is obtained by detaching the positive electrode film from the PET film, subjecting the positive electrode film to punching into a circle with a diameter of 14.5 mm, and uniaxially pressing the positive electrode film at 20 MPa for one minute in a thickness direction thereof.

(Manufacturing of All-Solid-State Lithium-Ion Battery)

A laminate is obtained by laminating a positive electrode active material sheet and a solid electrolyte pellet (for example, manufactured by Toshima Seisakusho Co., Ltd.) made of $Li_{6.75}La_3Zr_{1.75}Nb_{0.25}O_{12}$ and uniaxially pressing them parallel to the lamination direction.

Organic components are eliminated by heating the positive electrode active material sheet of the obtained laminate and a positive electrode collector (a gold foil; a thickness of 500 $\mu$m) at 300 °C for one hour in a state in which they overlap and are subjected to a pressure of 100 gf. Furthermore, a laminate formed of the solid electrolyte layer and the positive electrode is obtained by increasing a temperature of the positive electrode active material sheet of the obtained laminate and a positive electrode collector to 800 °C at 5 °C/min and then sintering the positive electrode active material sheet of the obtained laminate and a positive electrode collector at 800 °C for one hour.

Subsequently, the following operations are performed in a glove box in an argon atmosphere.

The solid electrolyte layer of the laminate of the solid electrolyte layer and the positive electrode, a negative electrode (a Li foil; a thickness of 300 $\mu$m), a negative electrode collector (a stainless steel plate; a thickness of 50 $\mu$m), and a wave washer (made of stainless steel) are also superimposed on each other.

With regard to the laminate in which the solid electrolyte layer of the laminate of the solid electrolyte layer and the positive electrode, a negative electrode, the negative electrode collector, and the wave washer overlap, an all-solid-state lithium-ion battery is prepared by placing the positive electrode on a lower lid of parts for a coin-type battery R2032 (manufactured by Hosen Co., Ltd.), causing the positive electrode, the lower lid, and the wave washer to overlap, using the positive electrode, the lower lid, and the wave washer as an upper lid, and caulking the positive electrode, the lower lid, and the wave washer using a caulking machine.

[Charge and Discharge Test]

A charge and discharge test is performed and initial charge and discharge efficiency is calculated under the following conditions using a half cell prepared through the above-described method.

(Charge and Discharge Conditions)

Test temperature 60 °C
Maximum charging voltage 4.3 V
Charge current density 0.01 C
Discharge minimum voltage 2.0 V
Discharge current density 0.01 C
Cut off 0.002 C

(Calculation of Initial Charge and Discharge Efficiency)

Initial charge and discharge efficiency is obtained on the basis of the following calculation formula from the charge capacity and the discharge capacity when charging and discharging are performed under the above conditions.

$$\text{Initial charge and discharge efficiency } (\%)$$

$$= \text{initial discharge capacity (mAh/g)/initial charge capacity (mAh/g)} \times 100$$

(Other Constitution 1)

It is desirable that, in a positive electrode active material in this embodiment, particles constituting the positive electrode active material include primary particles, secondary particles formed through agglomeration of the primary particles, and single particles presenting independently of the primary particles and the secondary particles.
In the present invention, the "primary particles" correspond to particles which do not have grain boundaries in an appearance when observed in a 20,000-fold visual field using a scanning electron microscope and whose particle diameters are less than 0.5 μm.
In the present invention, the "secondary particles" correspond to particles which are formed through agglomeration of the primary particles. The secondary particles have grain boundaries in an appearance when observed in a 20,000-fold visual field using a scanning electron microscope.
In the present invention, the "single particles" correspond to particles which are present independently of the secondary particles and do not have grain boundaries on the appearance when observed in a 20000-fold visual field using a scanning electron microscope and whose particle diameters are 0.5 μm or more.
That is to say, the positive electrode active material in this embodiment includes particles which do not have grain boundaries on the appearance and particles which have grain boundaries on the appearance when observed in a 20000-fold visual field using a scanning electron microscope.
The particles which do not have grain boundaries on the appearance include "primary particles" having particle diameters smaller than a particle diameter of 0.5 μm and "single particles" having particle diameters larger than the particle diameter of 0.5 μm.
The particles which have grain boundaries on the appearance correspond to "secondary particles" which are agglomerates of the "primary particles."
In the positive electrode active material in this embodiment, the content of the single particles in all of the particles is preferably 20% or more. When a positive electrode active material in which the content of the single particles in all of the particles is 20% or more is used for an all-solid-state battery, a contact interface between the positive electrode active material and a solid electrolyte is easily secured in a positive electrode layer and lithium ions are smoothly transmitted through an interface.
In the positive electrode active material in which the content of the single particles of all of the particles is 20% or more, grain boundaries are not present in the particles of the single particles of all of the particles. Thus, even when the positive electrode active material is used for the positive electrode of the all-solid-state battery and charging and discharging are repeatedly performed, the particles do not easily break and transmission paths are easily maintained.
An average particle diameter of the single particles is preferably 0.5 μm or more, and more preferably 1.0 μm

or more. Furthermore, an average particle diameter of the single particles is preferably 10 μm or less, and more preferably 5 μm or less.

It is possible to arbitrarily combine upper limit values and lower limit values of the average particle diameter of the single particles.

An average particle diameter of the secondary particles is preferably 3.0 μm or more, and more preferably 5.0 μm or more. Furthermore, the average particle diameter of the secondary particles is preferably 15 μm or less, and more preferably 10 μm or less.

It is possible to arbitrarily combine upper limit values and lower limit values of the average particle diameter of the secondary particles.

The average particle diameters of the single particles and the secondary particles can be measured using the following method.

First, the positive electrode active material in this embodiment is placed above a conductive sheet stuck above a sample stage. Subsequently, observation is performed in a 20000-fold visual field by irradiating the positive electrode active material with an electron beam with an acceleration voltage of 20 kV using a scanning electron microscope (for example, JSM-5510 manufactured by JEOL Ltd.).

Subsequently, an image of 50 or more and 98 or less single particles or secondary particles is obtained from the obtained electron microscope image (a SEM photograph) using the following method.

(Method for Obtaining Image of Single Particles)

When the average particle diameter of the single particles is measured, when viewed in a 20000-fold wide visual field, all of the single particles included in one visual field are measurement targets. When the number of single particles included in one visual field is less than 50, the single particles in a plurality of visual fields are measurement targets until the number of measurements is 50 or more.

(Method for Obtaining Image of Secondary Particles)

When the average particle diameter of the secondary particles is measured, when viewed in a 20000-fold wide visual field, all of the secondary particles included in one visual field are measurement targets. When the number of secondary particles included in one visual field is less than 50, the secondary particles in a plurality of visual fields are measurement targets until the number of measurements is 50 or more.

With regard to the obtained image of the single particles or the secondary particles, measurement is performed using a distance (a diameter in a fixed direction) between parallel lines drawn from a certain direction when the parallel lines are provided as a particle diameter of the single particles or the secondary particles.

An arithmetic average value of the obtained particle diameter of the single particles or the secondary particles is an average particle diameter of the single particles included in the positive electrode active material or an average particle diameter of the secondary particles included in the positive electrode active material.

(Other Constitution 2)

It is desirable that, in a positive electrode active material in this embodiment, a coated layer made of a metal composite oxide be provided on surfaces of particles of a lithium metal composite oxide constituting the positive electrode active material.

As the metal composite oxide constituting the coated layer, an oxide having lithium ion conductivity is used.

Even when the metal composite oxide constituting the coated layer does not have lithium ion conductivity, if the coated layer is very thin (for example, 0.1 nm or more and 1.0 nm or less), it is known that battery performance is improved as compared with a positive electrode active material which does not have a coated layer. In this case, it is presumed that lithium ion conductivity is expressed in the coated layer. However, a method for manufacturing a positive electrode active material by attaching a uniform coated layer on the surfaces of the particles of the lithium metal composite oxide by performing control so that the coated layer has a thickness of 0.1 nm or more and 1.0 nm or less is limited to manufacturing methods having poor mass productivity. Examples of such manufacturing methods having poor mass productivity include atomic laser deposition (ALD) methods.

On the other hand, if the metal composite oxide constituting the coated layer has lithium ion conductivity, even when a thickness of the coated layer is about 5 nm to 20 nm, the coated layer is preferable because it can suitably transmit lithium ions and improve battery performance.

The thickness of the coated layer can be measured using a positive electrode active material having a maximum diameter of a 50% cumulative volume particle size D50 (μm) ±5% obtained through a laser diffraction type particle size distribution measurement as a target. An arithmetic average value of measured values of 10 particles is defined as a thickness of the coated layer.

An average thickness of the coated layer of the particles of the positive electrode active material which is a measurement target is obtained based on an analysis result using a scanning transmission electron microscope (STEM)-energy dispersive X-ray spectroscopy (EDX). It is possible to obtain the thickness of the coated layer by creating a line profile of an element specific to the coated layer and setting a range in which the specific element is detected to a range in which the coated layer is present on the basis of the obtained line profile.

As such a metal composite oxide, for example, a metal composite oxide with Li and at least one element selected from the group consisting of Nb, Ge, Si, P, Al, W, Ta, Ti, S, Zr, Zn, V, and B can be exemplified.

If the positive electrode active material in this embodiment has the coated layer, it is possible to prevent the formation of a high-resistance layer at the interface between the positive electrode active material and the solid electrolyte and it is possible to realize a high output of the all-solid-state battery. Such an effect is easily obtained in a sulfide-based all-solid-state battery using a sulfide-based solid electrolyte as a solid electrolyte.

<Manufacturing Method 1 of Positive Electrode Active Material>

When the lithium metal composite oxide contained in the positive electrode active material in this embodiment is manufactured, first, it is desirable that a metal composite compound containing a metal other than lithium among metals constituting the lithium metal composite oxide which is an object be prepared and the prepared metal composite compound be calcined together with an appropriate lithium salt and an inert fusing agent.

To be specific, the "metal composite compound" is a compound containing Ni which is an essential metal and any one or more of any metals of Co, Mn, Fe, Cu, Ti, Mg, Al, W, B, Mo, Nb, Zn, Sn, Zr, Ga, La, and V.

As the metal composite compound, a metal composite hydroxide or a metal composite oxide is preferable.

An example of the manufacturing method for a lithium metal composite oxide will be described below separately for a manufacturing process for a metal composite compound and a manufacturing process for a lithium metal composite oxide.

(Manufacturing Process for Metal Composite Compound)

A metal composite compound can be manufactured using a commonly known co-precipitation method. As the co-precipitation method, a commonly known batch type co-precipitation method or a continuous type co-precipitation method can be used. The manufacturing method for a metal composite compound will be described in detail below using a metal composite hydroxide including nickel, cobalt, and manganese as an example.

First, a metal composite hydroxide represented by $Ni_aCo_bMn_c(OH)_2$ is manufactured by causing a nickel salt solution, a cobalt salt solution, a manganese salt solution, and a complexing agent to react together using a co-precipitation method, particularly, the continuous type co-precipitation method described in Japanese Unexamined Patent Application, First Publication No. 2002-201028. a, b, and c in the formula satisfy a+b+c=1.

A nickel salt which is a solute of the nickel salt solution is not particularly limited, and for example, any one or more of nickel sulfate, nickel nitrate, nickel chloride, and nickel acetate can be used as the nickel salt.

As a cobalt salt which is a solute of the cobalt salt solution, for example, any one or more of cobalt sulfate, cobalt nitrate, cobalt chloride, and cobalt acetate can be used.

As a manganese salt which is a solute of the manganese salt solution, for example, any one or more of manganese sulfate, manganese nitrate, manganese chloride, and manganese acetate can be used.

The above metal salts are used at a ratio corresponding to a composition ratio of $Ni_aCo_bMn_c(OH)_2$ described above. That is to say, the metal salts are used in such a ratio that a molar ratio between nickel in the solute of the nickel salt solution, cobalt in the solute of the cobalt salt solution, and manganese in the solute of the manganese salt solution is a:b:c.

Also, a solvent for the nickel salt solution, the cobalt salt solution, and the manganese salt solution is water. That is to say, the nickel salt solution, the cobalt salt solution, and the manganese salt solution are aqueous solutions.

The complexing agent is a compound capable of forming a complex with nickel ions, cobalt ions, and manganese ions in an aqueous solution. Examples of the complexing agent include ammonium ion donors, hydrazine, ethylenediaminetetraacetic acid, nitrilotriacetic acid, uracil diacetate, and glycine. Examples of the ammonium ion donors include ammonium salts such as ammonium hydroxide, ammonium sulfate, ammonium chloride, ammonium carbonate, and ammonium fluoride.

In the manufacturing process for the metal composite hydroxide, the complexing agent may or may not be used. When the complexing agent is used, an amount of complexing agents included in a mixed solution including a nickel salt solution, any metal salt solution, and a complexing agent is, for example, a molar ratio of more than 0 and 2.0 or less with respect to the total number of moles of the metal salts. In this embodiment, an amount of complexing agents included in a mixed solution including a nickel salt solution, a cobalt salt solution, a manganese salt solution, and a complexing agent is, for example, a molar ratio of more than 0 and 2.0 or less with respect to the total number of moles of the metal salts.

In the co-precipitation method, in order to adjust a pH value of a mixed solution including a nickel salt solution, any metal salt solution, and a complexing agent, before the pH of the mixed solution changes from alkaline to neutral, an alkali metal hydroxide is added to the mixed solution. The alkali metal hydroxide is, for example, sodium hydroxide or potassium hydroxide.

A pH value in this specification is defined as a value measured when a temperature of a mixed solution is 40 °C. A pH of the mixed solution is measured when the temperature of the mixed solution sampled from a reaction tank reaches 40 °C. When the temperature of the sampled mixed solution is less than 40 °C, the mixed solution is heated to 40 °C and the pH of the mixed solution is measured. When the temperature of the sampled mixed solution exceeds 40 °C, the mixed solution is cooled to 40 °C and the pH of the mixed solution is measured.

If a complexing agent is continuously supplied to the reaction tank in addition to the nickel salt solution, the cobalt salt solution, and the manganese salt solution, nickel, cobalt, and manganese react to produce $Ni_aCo_bMn_c(OH)_2$.

During the reaction, a temperature of the reaction tank is controlled, for example, such that it is within the range of 20 °C or more and 80 °C or less, and preferably 30 °C or more and 70 °C or less.

Also, during the reaction, a pH value in the reaction tank is controlled, for example, such that it is within the range of pH 9 or more and pH 13 or less, and preferably pH 11 or more and pH 13 or less.

Materials in the reaction tank are stirred and mixed.

As a reaction tank used in the continuous type co-precipitation method, a reaction tank of a type in which the formed reaction precipitate overflows for separation can be used.

It is possible to control various physical properties such as a secondary particle diameter and a pore radius of the finally obtained lithium metal composite oxide by controlling a concentration of a metal salt, a stirring speed, a reaction temperature, and a reaction pH of a metal salt solution supplied to the reaction tank, calciningcalcining conditions to be described later, and the like.

In addition to controlling the above conditions, various gases, for example, inert gases such as nitrogen, argon, and carbon dioxide, oxidizing gases such as air and oxygen, or a mixed gas thereof may be supplied to the reaction tank and an oxidation state of the obtained reaction product may be controlled.

As compounds (oxidizing agents) which oxidize the obtained reaction product, peroxides such as hydrogen peroxide, peroxide salts such as permanganates, perchlorates, hypochlorites, nitric acid, halogen, ozone, and the like can be used.

As compounds which reduce the obtained reaction product, organic acids such as oxalic acid and formic acid, sulfites, and hydrazine can be used.

To be specific, the inside of the reaction tank may be an inert atmosphere. If the inside of the reaction tank is an inert atmosphere, a metal which is more easily oxidized than nickel among metals contained in the mixed solution is prevented from agglomerating before nickel. For this reason, a uniform metal composite hydroxide is obtained.

The inside of the reaction tank may be an appropriate oxidizing atmosphere. The oxidizing atmosphere may be an oxygen-containing atmosphere in which an oxidizing gas is mixed with an inert gas or an atmosphere in which an oxidizing agent is present in an inert gas atmosphere. When the inside of the reaction tank is an appropriate oxidizing atmosphere, a transition metal contained in a mixed solution is oxidized and a form of a metal composite oxide is easily controlled.

Oxygen and an oxidizing agent in an oxidizing atmosphere should have sufficient oxygen atoms to oxidize the transition metal.

When the oxidizing atmosphere is an oxygen-containing atmosphere, an atmosphere in the reaction tank can be controlled using a method such as passing an oxidizing gas through the inside of the reaction tank, bubbling an oxidizing gas in the mixed solution, or the like.

After the above reaction, a metal composite compound is obtained by washing the obtained reaction precipitate with water and then drying the reaction precipitate. In this embodiment, a nickel-cobalt-manganese hydroxide is obtained as a metal composite compound. Furthermore, when contaminants derived from the mixed solution remain in the reaction precipitate after washing the reaction precipitate with water only, if necessary, the reaction precipitate may be washed with a weak acid water or an alkaline solution. Examples of the alkaline solution include an aqueous solution containing sodium hydroxide and an aqueous solution containing potassium hydroxide.

In this embodiment, when the metal composite compound obtained through drying is pulverized by applying an appropriate external force to adjust a dispersion state of particles, it is possible to obtain a metal composite hydroxide in which Requirements 2 and 3 can be easily controlled such that they are within the range of this embodiment.

The "appropriate external force" refers to an external force which is sufficient to disperse an agglomerated state without damaging the crystallite of the metal composite compound. In this embodiment, at the time of the above pulverization, a pulverizing machine is preferably a grinding machine, and particularly preferably a stone mill type grinding machine. When a stone mill type grinding machine is used, it is desirable to adjust the clearance between an upper mill and a lower mill in accordance with an agglomerated state of a metal composite hydroxide. The clearance between the upper mill and the lower mill is preferably, for example, in the range of 10 μm or more and 200 μm or less.

Although a nickel-cobalt-manganese composite hydroxide has been manufactured in the above example, a nickel-cobalt-manganese composite oxide may be prepared.

For example, it is possible to prepare a nickel-cobalt-manganese composite oxide by calciningcalcining a nickel-cobalt-manganese composite hydroxide. In a calciningcalcining time, it is desirable that the total time from the start of an increase in temperature to the completion of the temperature holding after reaching the temperature be one hour or more 30 hours or less. A rate of temperature increase in a heating process in which the temperature reaches a maximum holding temperature is preferably 180 °C/hour or more, more preferably 200 °C/hour or more, and particularly preferably 250 °C/hour or more.

The maximum holding temperature in this specification is a maximum temperature of a holding temperature in an atmosphere in a calciningcalcining furnace in a calciningcalcining process and refers to a calciningcalcining temperature in the calciningcalcining process. In the case of this calciningcalcining process having a plurality of heating processes, the maximum holding temperature refers to a maximum temperature in the heating processes.

The temperature increasing rate in this specification is calculated from a time from the start of increasing a temperature to reaching of a maximum holding temperature and a temperature difference between a temperature at the start of increase a temperature in the calciningcalcining furnace of a calciningcalcining device and a maximum holding temperature in the calciningcalcining device.

(Manufacturing Process for Lithium Metal Composite Oxide)

In this process, after a metal composite oxide or a metal composite hydroxide are dried, a metal composite oxide or a metal composite hydroxide is mixed with a lithium salt. Furthermore, in this embodiment, it is desirable to mix in an inert fusing agent simultaneously with this mixing.

When a mixture containing a metal composite oxide, a lithium salt, and an inert fusing agent or a mixture containing a metal composite hydroxide, a lithium salt, and an inert fusing agent is calcined, a mixture containing a metal composite compound and a lithium salt is calcined in the presence of the inert fusing agent. It is possible to prevent generation of secondary particles due to sintering of primary particles by calciningcalcining the mixture containing a metal composite compound and a lithium salt in the presence of an inert fusing agent. Furthermore, it is possible to promote growing of single particles.

As the lithium salt, any one of lithium carbonate, lithium nitrate, lithium acetate, lithium hydroxide, lithium hydroxide, lithium oxide, lithium chloride, and lithium fluoride or a combination of two or more of these can be used. Among these, one or both of lithium hydroxide and lithium carbonate are preferable.

When lithium hydroxide contains lithium carbonate as an impurity, the content of lithium carbonate in the lithium hydroxide is preferably 5 mass% or less.

In this embodiment, the drying conditions are not particularly limited. The drying conditions may be, for example, any of the following 1) to 3).

1) Conditions under which a metal composite oxide or a metal composite hydroxide is not oxidized or reduced; specifically, drying conditions under which an oxide is maintained as an oxide and drying conditions under which a hydroxide is maintained as a hydroxide.
2) Conditions under which a metal composite hydroxide is oxidized; specifically, drying conditions under which a hydroxide is oxidized to an oxide.
3) Conditions under which a metal composite oxide is reduced; specifically, drying conditions under which an oxide is reduced to a hydroxide.

For conditions under which oxidation or reduction is not performed, an inert gas such as nitrogen, helium, or argon may be used in an atmosphere at the time of drying.

For conditions under which a hydroxide is oxidized, oxygen or air may be used in an atmosphere at the time of drying.

Also, for conditions under which a metal composite oxide is reduced, a reducing agent such as hydrazine and sodium sulfite may be used in an inert gas atmosphere at the time of drying.

After a metal composite oxide or a metal composite hydroxide has been dried, classification may be performed as appropriate.

The lithium salt and the metal composite compound described above are used in consideration of a composition ratio of a final target. For example, when a nickel-cobalt-manganese composite compound is used, a lithium salt and a metal composite compound are weighed and used at a ratio of a composition ratio of $LiNi_aCo_bMn_cO_2$. a, b, and c in the formula satisfy a+b+c=1.

In the lithium metal composite oxide which is a final object, when a content molar ratio of lithium exceeds 1, lithium contained in the lithium salt and a metal element contained in the metal composite compound are mixed at a ratio at which a molar ratio of lithium contained in the lithium salt and the metal element contained in the metal composite compound exceeds 1.

A lithium-nickel-cobalt-manganese composite oxide is obtained by calcining the mixture of the nickel-cobalt-manganese composite compound and the lithium salt. For the calcining, dry air, an oxygen atmosphere, an inert atmosphere, or the like is used in accordance with a desired composition and a plurality of heating processes are performed if necessary.

In this embodiment, the mixture may be calcined in the presence of inert fusing agent. It is possible to promote reaction of the mixture by performing calcining in the presence of an inert fusing agent. The inert fusing agent may remain in the lithium metal composite oxide which has been subjected to calcining or may be removed by performing washing with water or alcohol after calcining. In this embodiment, the calcined lithium metal composite oxide is preferably washed with water or alcohol.

By adjusting the holding temperature in calcining, it is possible to control a particle diameter of single particles of the obtained lithium metal composite oxide such that it is within a preferable range of this embodiment.

Generally, when a holding temperature increases, the particle diameter of the single particles tends to increase and a BET specific surface area tends to decrease. The holding temperature in the calcining may be adjusted in accordance with a type of transition metal element to be used, a precipitant, a type of inert fusing agent, and an amount.

In this embodiment, the holding temperature may be set in consideration of the melting point of an inert fusing agent to be described later and is preferably set in the range of the melting point of the inert fusing agent-200 °C or more and the melting point of the inert fusing agent+200 °C or less.

Specific examples of the holding temperature include a range of 200 °C or more and 1150 °C or less, preferably a range of 300 °C or more and 1050 °C or less, or a range of 500 °C or more and 1000 °C or less.

Also, a holding time at the holding temperature is 0.1 hours or more and 20 hours or less, and preferably 0.5 hours or more and 10 hours or less. A temperature increasing rate to the holding temperature is generally 50 °C/hour or more and 400 °C/hour or less and a rate of temperature decrease from the holding temperature to room temperature is generally 10 °C/hour or more and 400 °C/hour or less. Furthermore, as a calcining atmosphere, air, oxygen, nitrogen, argon, or a mixed gas thereof can be used.

The lithium metal composite oxide obtained through calcining is classified after pulverization and a positive electrode active material capable of being applied to a lithium secondary battery is obtained.

In this embodiment, it is possible to obtain a lithium metal composite oxide in which Requirements 2 and 3 are controlled such they are within the range of this embodiment by pulverizing the lithium metal composite oxide obtained through calcining by applying an appropriate external force to the lithium metal composite oxide and adjusting a dispersion state of particles.

In this embodiment, it is possible to obtain a lithium metal composite oxide in which Requirements 2 and 3 are controlled in the range of this embodiment by pulverizing the lithium metal composite oxide obtained through calcining by applying an appropriate external force to the lithium metal composite oxide and adjusting a dispersion state of particles.

The "appropriate external force" refers to an external force which is sufficient to disperse agglomerations without damaging the crystallites of the lithium metal composite oxide. In this embodiment, at the time of the above pulverization, as a pulverizing machine, a grinding machine is preferably used, and particularly preferably a stone mill type grinding machine is used. When a stone mill type grinding machine is used, it is desirable to adjust the clearance between an upper mill and a lower mill in accordance with an agglomerated state of the lithium metal composite oxide. The clearance between the upper mill and the lower mill is preferably, for example, in the range of 10 $\mu$m or more and 200 $\mu$m or less.

The inert fusing agent which can be used in this embodiment is not particularly limited as long as it does not easily react with a mixture at the time of calcining. In this embodiment, a salt of at least one element selected from the group consisting of Na, K, Rb, Cs, Ca, Mg, Sr, and Ba is used. In the following description, one or more elements selected from the group consisting of Na, K, Rb, Cs, Ca, Mg, Sr, and Ba are referred to as "A." Examples of the salt of A include one or more selected from the group consisting of fluorides, chlorides of A, carbonates of A, sulfates of A, nitrates of A, phosphates of A, hydroxides of A, molybdates of A, and tungstates of A.

Examples of the fluorides of A include NaF (melting point: 993 °C), KF (melting point: 858 °C), RbF (melting point: 795 °C), CsF (melting point: 682 °C), $CaF_2$ (melting point: 1402 °C), $MgF_2$ (melting point: 1263 °C), $SrF_2$ (melting point: 1473 °C), and $BaF_2$ (melting point: 1355 °C).

Examples of the chlorides of A include NaCl (melting point: 801 °C), KC1 (melting point: 770 °C), RbCl (melting point: 718 °C), CsCl (melting point: 645 °C), $CaCl_2$ (melting point: 782 °C), MgCh (melting point: 714 °C), $SrCl_2$ (melting point: 857 °C), and $BaCl_2$ (melting point: 963 °C).

Examples of the carbonates of A include Na2CO3 (melting point: 854 °C), $K_2CO_3$ (melting point: 899 °C), $Rb_2CO_3$ (melting point: 837 °C), $Cs_2CO_3$ (melting point: 793 °C), $CaCO_3$ (melting point: 825 °C), $MgCO_3$ (melting point: 990 °C), $SrCO_3$ (melting point: 1497 °C), and BaCO3 (melting point: 1380 °C).

Examples of the sulfates of A include $Na_2SO_4$ (melting point: 884 °C), $K_2SO_4$ (melting point: 1069 °C), $Rb_2SO_4$ (melting point: 1066 °C), $Cs_2SO_4$ (melting point: 1005 °C), $CaSO_4$ (melting point: 1460 °C), $MgSO_4$ (melting point: 1137 °C), $SrSO_4$ (melting point: 1605 °C), and $BaSO_4$ (melting point: 1580 °C).

Examples of the nitrates of A include $NaNO_3$ (melting point: 310 °C), $KNO_3$ (melting point: 337 °C), $RbNO_3$ (melting point: 316 °C), $CsNO_3$ (melting point: 417 °C), $Ca(NO_3)_2$ (melting point: 561 °C), $Mg(NO_3)_2$, $Sr(NO_3)_2$ (melting point: 645 °C), and $Ba(NO_3)_2$ (melting point: 596 °C).

Examples of the phosphates of A include $Na_3PO_4$, $K_3PO_4$ (melting point: 1340 °C), $Rb_3PO_4$, $CS_3PO_4$, $Ca_3(PO_4)_2$, $Mg_3(PO_4)_2$ (melting point: 1184 °C), $Sr_3(PO_4)_2$ (melting point: 1727 °C), and $Ba_3(PO_4)_2$ (melting point: 1767 °C).

Examples of the hydroxides of A include $NaOH$ (melting point: 318 °C), $KOH$ (melting point: 360 °C), $RbOH$ (melting point: 301 °C), $CsOH$ (melting point: 272 °C), $Ca(OH)_2$ (melting point: 408 °C), $Mg(OH)_2$ (melting point: 350 °C), $Sr(OH)_2$ (melting point: 375 °C), and $Ba(OH)_2$ (melting point: 853 °C).

Examples of the molybdates of A include $Na_2MoO_4$ (melting point: 698 °C), $K_2MoO_4$ (melting point: 919 °C), $Rb_2MoO_4$ (melting point: 958 °C), $Cs_2MoO_4$ (melting point: 956 °C), $CaMoO_4$ (melting point: 1520 °C), $MgMoO_4$ (melting point: 1060 °C), $SrMoO_4$ (melting point: 1040 °C), and $BaMoO_4$ (melting point: 1460 °C).

Examples of the tungstates of A include $Na_2WO_4$ (melting point: 687 °C), $K_2WO_4$, $Rb_2WO_4$, $Cs_2WO_4$, $CaWO_4$, $MgWO_4$, $SrWO_4$, and $BaWO_4$.

In this embodiment, two or more of these inert fusing agents can also be used. When two or more types are used, melting points of all of the inert fusing agents may be reduced in some cases.

Also, among these inert fusing agents, as an inert fusing agent configured to obtain a lithium metal composite oxide having higher crystallinity, one or more salts selected from the group consisting of the carbonates of A, the sulfates of A, and the chlorides of A are preferable.

Also, A is preferably one or both of sodium (Na) and potassium (K).

That is to say, among the above inert fusing agents, particularly, preferred inert fusing agents are one or more selected from the group consisting of NaCl, KCl, $Na_2CO_3$, $K_2CO_3$, $Na_2SO_4$, and $K_2SO_4$.

When these inert fusing agents are used, it is possible to easily control an average crushing strength of the obtained lithium metal composite oxide such that it is within the preferred range of this embodiment.

In this embodiment, when one or both of the inert fusing agents such as $K_2SO_4$ and $Na_2SO_4$ are used, it is possible to easily control the average crushing strength of the obtained lithium metal composite oxide in the preferred range of this embodiment.

In this embodiment, an amount of inert fusing agents present at the time of calcining may be selected. In order to make the average crushing strength of the obtained lithium metal composite oxide fall in the range of this embodiment, the amount of inert fusing agents present at the time of calcining is preferably 0.1 parts by mass or more, and more preferably 1 part by mass or more with respect to 100 parts by mass of a lithium compound. Furthermore, when the growing of the crystals obtained through calcining is further promoted, an inert fusing agent other than the above-described inert fusing agents may be also be used. Examples of the inert fusing agent other than the above-described inert fusing agents include ammonium salts or the like such as $NH_4Cl$ and $NH_4F$.

(Forming Process of Coated Layer)

When a coated layer is formed on surfaces of the particles of the positive electrode active material, as one method, a method for mixing a raw material for a coating material with the lithium metal composite oxide and causing the raw material for a coating material and the lithium metal composite oxide to react may be exemplified. When the reaction between the raw material for a coating material and the lithium metal composite oxide is insufficient, a mixture of the raw material for a coating material and the lithium metal composite oxide may be subjected to a heating treatment. Thus, it is possible to form a coated layer made of the lithium metal composite oxide on the particles of the lithium metal composite oxide. In this case, the lithium metal composite oxide constituting the particles of the lithium metal composite oxide and the lithium metal composite oxide constituting the coated layer are different oxides.

As the raw material for a coating material, the above-described lithium salts and oxides, hydroxides, carbonates, nitrates, sulfates, halides, oxalates, or alkoxides of at least one element selected from the group consisting of Nb, Ge, Si, P, Al, W, Ta, Ti, S, Zr, Zn, V, and B can be used. A compound containing at least one element selected from the group consisting of Nb, Ge, Si, P, Al, W, Ta, Ti, S, Zr, Zn, V, and B is preferably an oxide.

Examples of the raw material for a coating material include aluminum oxide, aluminum hydroxide, aluminum sulfate, aluminum chloride, aluminum alkoxides, boron oxide, boric acid, and the like. In addition, as the raw material for a coating material, aluminum oxide, aluminum hydroxide, boron oxide, boric acid, niobium oxide, lithium niobate, lithium borate, lithium phosphate, and lithium silicate are preferable.

In order to more efficiently coat a surface of the lithium metal composite oxide with the raw material for a coating material, the raw material for a coating material preferably has particles finer than the secondary particles of the lithium metal composite oxide. To be specific, an average secondary particle diameter of the raw material for a coating material is preferably 1 $\mu$m or less, and more preferably 0.1 $\mu$m or less.

A lower limit of the average secondary particle diameter of the raw material for a coating material is preferably as small as possible. The lower limit of the average secondary particle diameter of the raw material for a coating material is, for example, 0.001 $\mu$m. It is possible to measure the average secondary particle diameter of the raw material for a coating material in the same manner as in the average secondary particle diameter of the lithium metal composite oxide.

When the coated layer is formed, the raw material for a coating material and the lithium metal composite oxide are uniformly mixed until agglomerates of the raw material for a coating material and agglomerates of the lithium metal composite oxide disappear. A mixing device is not limited as long as it can uniformly mix the raw material for a coating material and the lithium metal composite oxide. As the mixing device, a Loedige mixer is preferable.

Also, it is possible to cause the coated layer to more firmly adhere to the surface of the lithium metal composite oxide by performing mixing in an atmosphere in which water or water and carbon dioxide gas are included.

After the mixing, it is possible to cause the coated layer to more firmly adhere to the surface of the lithium metal composite oxide also by holding the raw material for a coating material and the lithium metal composite oxide in an atmosphere in which water or water and carbon dioxide gas are included.

When the raw material for a coating material and the lithium metal composite oxide are mixed and then subjected to heat treatment, the heat treatment conditions may be different in accordance with a type of raw material for a coating material in some cases. Examples of the heat treatment conditions include a heat treatment temperature and a heat treatment holding time.

For example, when aluminum is used as the raw material for a coating material, it is desirable to perform calcining at a temperature in a range of 600 °C or more and 800 °C or less for four hours or more and 10 hours or less. It is possible to control a particle size in the range of Requirement 2 by performing calcining under the calcining conditions at a high temperature for a long time. If the calcining temperature is higher than 800 °C, the raw material for a coating material may form a solid solution with the lithium metal composite oxide and the coated layer may not be formed in some cases. If the calcining time is shorter than four hours, the raw material for a coating material may insufficiently diffuse and the coated layer may not be formed uniformly in some cases.

The calcining temperature in this specification is a temperature that corresponds to a temperature in the atmosphere in the calcining furnace and is a maximum temperature at the holding temperature in this calcining process. Hereinafter, the "maximum temperature at the holding temperature" may be referred to as a "maximum holding temperature." When this calcining process has a plurality of heating processes, a calcining temperature in each of the heating processes corresponds to a temperature at the time of performing heating at a maximum holding temperature.

As another method for forming a coated layer, it is possible to use a technique such as sputtering, chemical vapor deposition (CVD), vapor deposition, and spray coating. It is also possible to obtain a positive electrode active material for an all-solid-state lithium-ion battery by forming a coated layer on a surface of a lithium metal composite oxide through these techniques.

Also, for example, when there is no extreme calcining temperature difference in which a calcining temperature of a coated layer is 300 °C or more higher than the calcining temperature of the lithium metal composite oxide, in the manufacturing process for the lithium metal composite oxide described above, when a metal composite compound and a lithium salt are mixed, the positive electrode active material for an all-solid-state lithium-ion battery may be obtained by further adding a raw material for a coating material, mixing them together, and calcining them in some cases. When the calcining temperature of the coated layer to be manufactured is lower than the calcining temperature of the lithium metal composite oxide to be manufactured, it is desirable to apply such a manufacturing method.

In a mixing process for mixing the metal composite compound and the lithium salt, when the raw material for a coating material is further added, the raw material for a coating material, the metal composite compound, and the lithium salt are uniformly mixed until an agglomerate of the raw material for a coating material, an agglomerate of the metal composite compound, and an agglomerate of the lithium salt disappear. A mixing device is not limited as long as it can uniformly mix the raw material for a coating material, the metal composite compound, and the lithium salt. As the mixing device, a Lodige mixer is preferable.

The positive electrode active material for an all-solid-state lithium-ion battery is obtained by calcining the mixture of the raw material for a coating material, the metal composite compound, and the lithium salt under the calcining conditions of the coated layer described above and forming the coated layer on the surface of the lithium metal composite oxide.

The positive electrode active material for an all-solid-state lithium-ion battery is obtained by crushing and classifying the particles of the coated layer formed on the surfaces of the primary particles or the secondary particles of the lithium metal composite oxide.

<Manufacturing Method 2 for Positive Electrode Active Material>

When a positive electrode active material in this embodiment includes single particles and secondary particles, it is possible to manufacture a positive electrode active material from the manufacturing method 1 for the positive electrode active material described above by performing the following changes.

(Manufacturing Process for Metal Composite Compound)

In the manufacturing method 2 for the positive electrode active material, in a manufacturing process for a metal composite compound, a metal composite compound forming the single particles finally and a metal composite compound forming the secondary particles finally are respectively manufactured. Hereinafter, a metal composite compound which finally forms single particles may be referred to as a "single particle precursor" in some cases. Furthermore, a metal composite compound which finally forms secondary particles may be referred to as a "secondary particle precursor" in some cases.

In the manufacturing method 2 for the positive electrode active material, when a metal composite compound is manufactured through the above co-precipitation method, a first co-precipitation tank configured to manufacture a single particle precursor and a second co-precipitation tank configured to manufacture a secondary particle precursor are used.

It is possible to manufacture a single particle precursor by appropriately controlling a concentration of the metal salts supplied to the first co-precipitation tank, a stirring speed, a reaction temperature, a reaction pH, calcining conditions to be described later, and the like.

To be specific, a temperature of the reaction tank is preferably 30 °C or more and 80 °C or less, more preferably controlled in the range of 40 °C or more and 70 °C or less, and further preferably in the range of ±20 °C with respect to that of a second reaction tank to be described later.

Also, a pH value in the reaction tank is preferably pH 10 or more and pH 13 or less, more preferably controlled in the range of pH 11 or more and pH 12.5 or less, further preferably within the range of ±pH 2 with respect to that of a second reaction tank to be described later, and particularly preferably higher than a pH value of the second reaction tank.

Furthermore, it is possible to manufacture a second particle precursor by appropriately controlling a concentration of the metal salts supplied to the second co-precipitation tank, a stirring speed, a reaction temperature, a reaction pH, calcining conditions to be described later, and the like.

To be specific, a temperature of the reaction tank is preferably 20 °C or more and 80 °C or less, more preferably controlled in the range of 30 °C or more and 70 °C or less, and further preferably in the range of ±20 °C with respect to that of a second reaction tank to be described later.

Also, a pH value in the reaction tank is preferably pH 10 or more and pH 13 or less, more preferably controlled in the range of pH 11 or more and pH 12.5 or less, further preferably within the range of ±pH 2 with respect to that of a second reaction tank to be described later, and particularly preferably higher than a pH value of the second reaction tank.

A nickel-cobalt-manganese composite hydroxide is isolated by washing each of the reaction products obtained in this way with water and then drying it. The nickel-cobalt-manganese composite hydroxide to be isolated includes a single particle precursor and a secondary particle precursor.

Although the nickel-cobalt-manganese composite hydroxide has been manufactured in the above example, a nickel-cobalt-manganese composite oxide may be prepared. For example, it is possible to prepare a nickel-cobalt-manganese composite oxide by calcining a nickel-cobalt-manganese composite hydroxide. The above-described conditions can be adopted as the calcining conditions of the nickel-cobalt-manganese composite hydroxide.

(Manufacturing Process for Lithium Metal Composite Oxide)

In a manufacturing process for a lithium metal composite oxide, the above-described metal composite oxide or metal composite hydroxide as the single particle precursor and the secondary particle precursor obtained in the above process is dried and then mixed with a lithium salt. The single particle precursor and the secondary particle precursor may be dried and then classified.

It is possible to roughly control a presence ratio of the single particles and the secondary particles to be obtained by mixing the single particle precursor and the secondary particle precursor at a specific mass ratio at the time of mixing the single particle precursor and the secondary particle precursor.

In processes subsequent to mixing, the single particle precursor and the secondary particle precursor may be agglomerated or separated and secondary particles generated through agglomeration of the single particle precursor and single particles generated through separation of the secondary particle precursor may also be present. It is possible to control a presence ratio of the single particles and the secondary particles in the lithium metal composite oxide which is finally obtained by adjusting a mixing ratio of the single particle precursor and the secondary particle precursor and the process conditions of the processes subsequent to mixing.

It is possible to control the average particle diameter of the single particles and the average particle diameter of the secondary particles in the lithium metal composite oxide to be obtained in the preferred range of this embodiment by adjusting the holding temperature in the calcining.

<Manufacturing Method 3 for Positive Electrode Active Material>

Also, when a positive electrode active material in this embodiment includes single particles and secondary particles, the positive electrode active material can be manufactured by manufacturing respectively a first lithium metal composite oxide constituted of the single particles and a second lithium metal composite oxide constituted of the secondary particles through the manufacturing method 1 for the positive electrode active material described above and mixing the first lithium metal composite oxide and the second lithium metal composite oxide.

In the manufacturing method 3 for the positive electrode active material, in the manufacturing process for the lithium metal composite oxide, the holding temperature at the time of calcining the first lithium metal composite oxide may be higher than the holding temperature at the time of calcining the second lithium metal composite oxide. To be specific, when the first lithium metal composite oxide is manufactured, the holding temperature of the first lithium metal composite oxide is higher than the holding temperature of the second lithium metal composite oxide by preferably 30 °C or higher, more preferably 50 °C or higher, and still more preferably 80 °C or higher.

The lithium metal composite oxide containing the single particles and the secondary particles is obtained by mixing the first lithium metal composite oxide and the second lithium metal composite oxide which have been obtained at a predetermined ratio.

A composition of the positive electrode active material in this embodiment can be confirmed by dissolving the particles of the positive electrode active material in hydrochloric acid and then performing composition analysis using an inductively coupled plasma emission spectrometer (for example, SPS3000 manufactured by SII Nano Technology Inc.).

<All-Solid-State Lithium-Ion Battery>

The constitution of the all-solid-state lithium-ion battery will be described and the positive electrode using the positive electrode active material for an all-solid-state lithium-ion battery according to an aspect of the present invention as the positive electrode active material of the all-solid-state lithium-ion battery and the all-solid-state lithium-ion battery including the positive electrode will be described below.

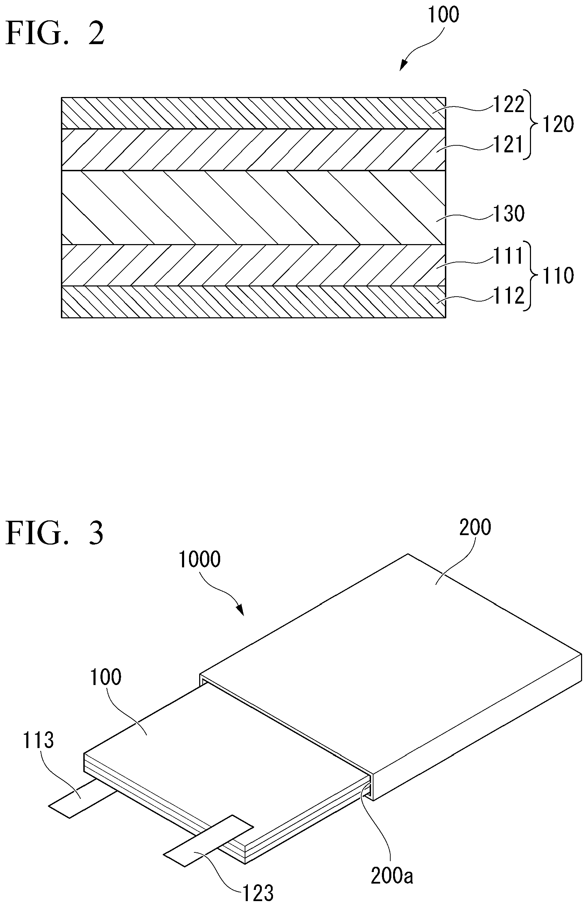

Figs. 2 and 3 are schematic diagrams illustrating an example of the all-solid-state lithium-ion battery in this embodiment. Fig. 2 is a schematic diagram illustrating a laminate included in the all-solid-state lithium-ion battery in this embodiment. Fig. 3 is a schematic diagram illustrating an overall constitution of the all-solid-state lithium-ion battery in this embodiment. The all-solid-state lithium-ion battery in this embodiment is a secondary battery.

An all-solid-state lithium-ion battery 1000 includes a laminate 100 having a positive electrode 110, a negative electrode 120, and a solid electrolyte layer 130 and an exterior body 200 configured to accommodate the laminate 100.

Material forming each member will be described later.

The laminate 100 may include an external terminal 113 connected to a positive electrode collector 112 and an external terminal 123 connected to a negative electrode collector 122.

In the laminate 100, the solid electrolyte layer 130 is disposed between the positive electrode 110 and the negative electrode 120 so that the positive electrode 110 and the negative electrode 120 are not short-circuited each other. In addition, the all-solid-state lithium-ion battery 1000 may have a separator which is disposed between the positive electrode 110 and the negative electrode 120 and used in a conventional liquid-based lithium-ion secondary battery and prevent a short circuit between the positive electrode 110 and the negative electrode 120.

The all-solid-state lithium-ion battery 1000 includes an insulator (not shown) configured to insulate between the laminate 100 and the exterior body 200 and a sealing body (not shown) configured to seal an opening portion 200a of the exterior body 200.

As the exterior body 200, a container formed of a highly corrosion-resistant metal material such as aluminum, stainless steel, and nickel-plated steel can be used. Furthermore, it is also possible to use a container obtained by processing a laminate film having at least one surface which has been subjected to a corrosion-resistant processing in a bag shape.

Examples of a shape of the all-solid-state lithium-ion battery 1000 include shapes such as a coin shape, a button shape, a paper type (or a sheet type), a cylindrical shape, and an angular shape.

Although the all-solid-state lithium-ion battery 1000 is illustrated as having one laminate 100, the present invention is not limited thereto. The all-solid-state lithium-ion battery 1000 may have a constitution in which a plurality of unit cells (the laminate 100) are sealed inside the exterior body 200 using the laminate 100 as a unit cell.

Constitutions will be sequentially described below.

(Positive Electrode)

The positive electrode 110 in this embodiment has a positive electrode active material layer 111 and the positive electrode collector 112.

The positive electrode active material layer 111 includes the positive electrode active material which is the above aspect of the present invention. Furthermore, the positive electrode active material layer 111 may include a solid electrolyte (a second solid electrolyte), a conductive material, and a binder.

The positive electrode active material included in the positive electrode active material layer 111 is in contact with the second solid electrolyte included in the positive electrode active material layer 111. To be specific, the positive electrode active material layer 111 includes a plurality of particles (a positive electrode active material) including crystals of a lithium metal composite oxide and a solid electrolyte filling between a plurality of particles (a positive electrode active material) and in contact with the particles (a positive electrode active material).

(Solid Electrolyte)

As a solid electrolyte which may be included in the positive electrode active material layer 111 in this embodiment, a solid electrolyte having lithium ion conductivity and used for known all-solid-state batteries can be employed. Examples of such a solid electrolyte include inorganic electrolytes and organic electrolytes. Examples of the inorganic electrolytes include oxide-based solid electrolytes, sulfide-based solid electrolytes, and hydride-based solid electrolytes. Examples of the organic electrolytes include polymer-based solid electrolytes.

(Oxide-Based Solid Electrolyte)

Examples of the oxide-based solid electrolytes include perovskite type oxides, NASICON type oxides, LISICON type oxides, garnet type oxides, and the like.

Examples of the perovskite type oxides include Li-La-Ti-based oxides such as $Li_aLa_{1-a}TiO_3$ (0<a<1), Li-La-Ta-based oxides such as $Li_bLa_{1-b}TaO_3$ (0<b<1), Li-La-Nb-based oxides such as $Li_cLa_{1-c}NbO_3$ (0<c<1), and the like.

Examples of the NASICON type oxides include $Li_{1+d}Al_dTi_{2-d}(PO_4)_3$ (0≤d≤1) and the like. The NASICON type oxides are oxides represented by $Li_mM^1_nM^2_oP_pO_q$. In the formula, $M^1$ indicates one or more elements selected from the group consisting of B, Al, Ga, In, C, Si, Ge, Sn, Sb, and Se. $M^2$ indicates one or more elements selected from the group consisting of Ti, Zr, Ge, In, Ga, Sn, and Al. m, n, o, p, and q are arbitrary integers.

Examples of the LISICON type oxides include oxides and the like represented by $Li_4M^3O_4$-$Li_3M^4O_4$. In the formula, $M^3$ indicates one or more elements selected from the group consisting of Si, Ge, and Ti. $M^4$ indicates one or more elements selected from the group consisting of P, As, and V.

Examples of the garnet type oxides include Li-La-Zr-based oxides and the like such as $Li_7La_3Zr_2O_{12}$(LLZ).

The oxide-based solid electrolytes may be crystalline materials or non-crystalline (amorphous) materials. Examples of the non-crystalline (amorphous) solid electrolytes include Li-B-O compounds such as $Li_3BO_3$, $Li_2B_4O_7$, and $LiBO_2$. It is desirable that the oxide-based solid electrolytes contain a non-crystalline material.

(Sulfide-Based Solid Electrolyte)

Examples of the sulfide-based solid electrolytes include $Li_2S$-$P_2S_5$-based compounds, $Li_2S$-$SiS_2$-based compounds, $Li_2S$-$GeS_2$-based compounds, $Li_2S$-$B_2S_3$-based compounds, $Li_2S$-$P_2S_3$-based compounds, $LiI$-$Si_2S$-$P_2S_5$, $LiI$-$Li_2S$-$P_2O_5$, $LiI$-$Li_3PO_4$-$P_2S_5$, $Li_{10}GeP_2S_{12}$, and the like.

In this specification, the expression "-based compounds" indicating sulfide-based solid electrolytes is used as a general expression for solid electrolytes mainly containing a raw material such as "$Li_2S$" and "$P_2S_5$" described before "-based compounds." For example, $Li_2S$-$P_2S_5$-basedcompounds include solid electrolytes containing $Li_2S$ and $P_2S_5$ and further containing other raw materials. Furthermore, the $Li_2S$-$P_2S_5$-based compounds also include solid electrolytes having different mixing ratio of $Li_2S$ and $P_2S_5$.

Examples of the $Li_2S$-$P_2S_5$-basedcompounds include $Li_2S$-$P_2S_5$, $Li_2S$-$P_2S_5$-$LiI$, $Li_2S$-$P_2S_5$-$LiCl$, $Li_2S$-$P_2S_5$-$LiBr$, $Li_2S$-$P_2S_5$-$Li_2O$, $Li_2S$-$P_2S_5$-$Li_2O$-$LiI$, $Li_2S$-$P_2S_5$-$Z_mS_n$ (m and n are positive numbers: Z is Ge, Zn, or Ga), and the like.

Examples of the $Li_2S$-$SiS_2$-based compounds include $Li_2S$-$SiS_2$, $Li_2S$-$SiS_2$-$LiI$, $Li_2S$-$SiS_2$-$LiBr$, $Li_2S$-$SiS_2$-$LiCl$, $Li_2S$-$SiS_2$-$B_2S_3$-$LiI$, $Li_2S$-$SiS_2$-$P_2S_5$-$LiI$, $Li_2S$-$SiS_2$-$Li_3PO_4$, $Li_2S$-$SiS_2$-$Li_2SO_4$, $Li_2S$-$SiS_2$-$Li_xMO_y$ (x and y are positive numbers: M is P, Si, Ge, B, Al, Ga, or In), and the like.

Examples of the $Li_2S-GeS_2$-based compounds include $Li_2S-GeS_2$, $Li_2S-GeS_2-P_2S_5$, and the like.

The sulfide-based solid electrolyte may be a crystalline material or a non-crystalline (amorphous) material. It is desirable that the sulfide-based solid electrolytes include non-crystalline materials.

(Hydride-Based Solid Electrolyte)

Examples of materials for the hydride-based solid electrolytes include $LiBH_4$, $LiBH_4 \cdot 3KI$, $LiBH_4-PI_2$, $LiBH_4-P_2S_5$, $LiBH_4-LiNH_2$, $3LiBH_4-LiI$, $LiNH_2$, $Li_2AlH_6$, $Li(NH_2)_2I$, $Li_2NH$, $LiGd(BH_4)_3Cl$, $Li_2(BH_4)(NH_2)$, $Li_3(NH_2)I$, $Li_4(BH_4)(NH_2)_3$, and the like.

Examples of the polymer-based solid electrolytes include organic-based polymer electrolytes such as polyethylene-oxide-based polymer compounds and polymer compounds containing one or more selected from the group consisting of polyorganosiloxane chains and polyoxyalkylene chains.

Also, a so-called gel type polymer-based solid electrolyte in which a non-aqueous electrolytic solution is held in a polymer compound can also be used. Unlike non-aqueous electrolytic solutions included in conventional liquid-based lithium-ion secondary batteries, the non-aqueous electrolytic solution included in the gel type polymer-based solid electrolyte loses fluidity and exhibits rigidity higher than that of the electrolytic solution. The rigidity of the electrolytic solution used for the liquid-based lithium-ion secondary battery is zero. In this regard, unlike the conventional liquid-based lithium-ion secondary batteries, the lithium-ion secondary battery using the gel type polymer-based solid electrolyte also corresponds to the all-solid-state lithium-ion battery of the present invention.

In the gel type polymer-based solid electrolyte, the proportion of the polymer compounds contained in the solid electrolyte layer is preferably 1 mass% or more and 50 mass% or less.

Two or more solid electrolytes can be used together as long as they do not impair the effects of the present invention.

(Conductive Material)

As a conductive material which may be included in the positive electrode active material layer 111 in this embodiment, carbon materials or metal compounds can be used. Examples of the carbon materials include graphite powders, carbon blacks (for example, acetylene blacks), fibrous carbon materials, and the like. Since the carbon blacks are fine particles and have large surface areas, it is possible to increase the conductivity inside the positive electrode 110 and improve charge and discharge efficiency and output characteristics by adding an appropriate amount of carbon blacks to the positive electrode active material layer 111. On the other hand, if an amount of carbon blacks to be added is too large, both of the binding force between the positive electrode active material layer 111 and the positive electrode collector 112 and the binding force inside the positive electrode active material layer 111 decrease, which causes an increase in internal resistance. Examples of the metal compounds include metals, metal alloys, and metal oxides which have electrical conductivity.

In the case of the carbon materials, the ratio of the conductive materials in the positive electrode active material layer 111 is preferably 5 parts by mass or more and 20 parts by mass or less with respect to 100 parts by mass of the positive electrode active material. When fibrous carbon materials such as graphitized carbon fibers or carbon nanotubes are used as the conductive materials, the ratio thereof can be reduced.

(Binder)

When the positive electrode active material layer 111 has a binder, thermoplastic resins can be used as the binder. Examples of the thermoplastic resins include polyimide resins, fluororesins such as polyvinylidene fluorides, polytetrafluoroethylenes, ethylene tetrafluoride/propylene hexafluoride/vinylidene fluoride-based copolymers, propylene hexafluoride/vinylidene fluoride-based copolymers, and ethylene tetrafluorides/perfluorovinyl ether-based copolymers; and polyolefin resins such as polyethylenes and polypropylenes.

Hereinafter, the polyvinylidene fluorides are referred to as a "PVdF" in some cases. Furthermore, the polytetrafluoroethylenes are referred to as a "PTFE" in some cases.

These thermoplastic resins of two or more types may be mixed and used. The positive electrode active material layer 111 have a high adhesive force between the positive electrode active material layer 111 and the positive electrode collector 112 and a high binding force inside the positive electrode active material layer 111 by making a ratio of fluororesins with respect to the entire positive electrode active material layer 111 have 1 mass% or more and 10 mass% or less, a ratio of polyolefin resins have 0.1 mass% or more and 2 mass% or less using the fluororesins and the polyolefin resins as a binder.

The positive electrode active material layer 111 may be processed in advance as a sheet-like molded body containing a positive electrode active material and used as an "electrode" in the present invention. Furthermore, in the following description, such a sheet-like molded body may be referred to as a "positive electrode active material sheet" in some cases. A laminate obtained by laminating current collectors on a positive electrode active material sheet may be used as an electrode.

The positive electrode active material sheet may include any one or more selected from the group consisting of the solid electrolyte, the conductive material, and the binder described above.

The positive electrode active material sheet is obtained, for example, by mixing a positive electrode active material, a sintering auxiliary agent, the above-described conductive material, the above-described binder, a plasticizer, and a solvent, preparing a slurry thereof, applying the obtained slurry above a carrier film, and drying the slurry.

Examples of the sintering auxiliary agent include $Li_3BO_3$ or $Al_2O_3$.

Examples of the plasticizer include dioctyl phthalate.

Examples of the solvent include acetone, ethanol, and N-methyl-2-pyrrolidone.

When the slurry is prepared, a ball mill can be used for mixing. Since the obtained mixture contains air bubbles mixed at the time of mixing in many cases, air bubbles may be removed under reduced pressure. If air bubble removal is performed, a part of the solvent volatilizes and the slurry is concentrated. Thus, the slurry has a high viscosity.

The slurry can be applied using a known doctor blade.

As the carrier film, a PET film can be used.

The positive electrode active material sheet obtained after drying is detached from the carrier film, processed into a required shape through punching, and used. Furthermore, the positive electrode active material sheet may be uniaxially pressed in a thickness direction.

(Positive Electrode Collector)

As the positive electrode collector 112 included in the positive electrode 110 in this embodiment, a sheet-like member having a metal material such as Al, Ni, stainless steel, and Au as a forming material can be used. It is desirable though to use Al as a material to form a thin film shape in that it is easy to process and inexpensive.

As a method for supporting the positive electrode active material layer 111 on the positive electrode collector 112, a method for forming the positive electrode active material layer 111 above the positive electrode collector 112 under pressure can be used. A cold press or a hot press can be used for the forming under pressure.

The positive electrode active material layer 111 may also be supported on the positive electrode collector 112 by pasting a mixture of a positive electrode active material, a solid electrolyte, a conductive material, and a binder into a positive electrode mixture using an organic solvent, applying the obtained positive electrode mixture on at least one surface side of the positive electrode collector 112 into a positive electrode mixture, drying it, pressing it, and fixing it.

Furthermore, the positive electrode active material layer 111 may be supported on the positive electrode collector 112 by pasting a mixture of a positive electrode active material, a solid electrolyte, and a conductive material using an organic solvent, applying the obtained positive electrode mixture on at least one surface side of the positive electrode collector 112 using it as a positive electrode mixture, drying it, and sintering it.

Examples of the organic solvent which can be used for the positive electrode mixture include amine-based solvents such as N, N-dimethylaminopropylamine and diethylenetriamine; ether-based solvents such as tetrahydrofuran; ketone-based solvents such as methyl ethyl ketone; ester-based solvents such as methyl acetate; and amide-based solvents such as dimethylacetamide and N-methyl-2-pyrrolidone. Hereinafter, N-methyl-2-pyrrolidone may be referred to as "NMP" in some cases.

Examples of a method for applying a positive electrode mixture on the positive electrode collector 112 include a slit die coating method, a screen coating method, a curtain coating method, a knife coating method, a gravure coating method, and an electrostatic spray method.

It is possible to manufacture the positive electrode 110 through the method described above.

(Negative Electrode)

The negative electrode 120 includes a negative electrode active material layer 121 and the negative electrode collector 122. The negative electrode active material layer 121 contains a negative electrode active material. Furthermore, the negative electrode active material layer 121 may contain a solid electrolyte and a conductive material. As the solid electrolyte, the conductive material, and the binder, those described above can be used.

(Negative Electrode Active Material)

Examples of the negative electrode active material included in the negative electrode active material layer 121 include materials which are carbon materials, chalcogen compounds (oxides, sulfides, and the like), nitrides, metals, or alloys and to/from which lithium ions can be doped and undoped at a potential lower than that of the positive electrode 110.

Examples of the carbon materials which can be used as the negative electrode active material include graphite such as natural graphite and artificial graphite, cokes, carbon blacks, pyrolytic carbons, carbon fibers, and organic polymer compound calcined bodies.

Examples of the oxides which can be used as the negative electrode active material include silicon oxides represented by the formula $SiO_x$ (where x is a positive real number) such as $SiO_2$ and SiO; titanium oxides represented by the formula $TiO_x$ (where x is a positive real number) such as $TiO_2$ and TiO; vanadium oxides represented by the formula $VO_x$ (where x is a positive real number) such as $V_2O_5$ and $VO_2$; iron oxides represented by the formula $FeO_x$ (where x is a positive real number) such as $Fe_3O_4$, $Fe_2O3$, and FeO; tin oxides represented by the formula $SnO_x$ (where x is a positive real number) such as $SnO_2$ and SnO; tungsten oxide represented by the general formula $WO_x$ (where x is a positive real number) such as $WO_3$ and $WO_2$; and metal composite oxides containing lithium and titanium or vanadium such as $Li_4Ti_5O_{12}$ and $LiVO_2$.

Examples of the sulfide which can be used as the negative electrode active material include titanium sulfides represented by the formula $TiS_x$ (where x is a positive real number) such as $Ti_2S_3$, $TiS_2$, and TiS; vanadium sulfides represented by the formula $VS_x$ (where x is a positive real number) such as $V_3S_4$, $VS_2$, and VS; iron sulfides represented by the formula $FeS_x$ (where x is a positive real number) such as $Fe_3S_4$, $FeS_2$, and FeS; molybdenum sulfides represented by the formula $MoS_x$ (where x is a positive real number) such as $Mo_2S_3$ and $MoS_2$; tin sulfides represented by the formula $SnS_x$ (where x is a positive real number) such as $SnS_2$ and SnS; tungsten sulfides represented by the formula $WS_x$ (where x is a positive real number) such as $WS_2$; antimony sulfides represented by the formula $SbS_x$ (where x is a positive real number) such as $Sb_2S_3$; and selenium sulfides represented by the formula $SeS_x$ (where x is a positive real number) such as $Se_5S_3$, $SeS_2$, and SeS.

Examples of the nitrides which can be used as the negative electrode active material include lithium-containing nitrides such as $Li_3N$ and $Li_{3-x}A_xN$ (where A is one or both of Ni and Co and $0<x<3$ is satisfied).

These carbon materials, oxides, sulfides, and nitrides may be used independently or a combination of two or more thereof may be used. Furthermore, these carbon materials, oxides, sulfides, and nitrides may be either crystalline or non-crystalline.

Also, examples of the metals which can be used as the negative electrode active material include lithium metals, silicon metals, tin metals, and the like.

Examples of alloys which can be used as the negative electrode active material include lithium alloys such as Li-Al, Li-Ni, Li-Si, Li-Sn, and Li-Sn-Ni; silicon alloys such as Si-Zn; tin alloys such as Sn-Mn, Sn-Co, Sn-Ni, Sn-Cu, and Sn-La; and alloys such as $Cu_2Sb$ and $La_3Ni_2Sn_7$.

These metals and alloys are mainly used independently as electrodes, for example, after being processed into a foil shape.

Among the above-described negative electrode active materials, because a potential of the negative electrode 120 hardly changes (potential flatness is excellent), and an average discharge potential is low from an uncharged state to a fully charged state during charging, and a capacity retention rate at the time of repeatedly charging and discharging is high (cycle characteristics are excellent), it is desirable that carbon materials having graphite such as natural graphite and artificial graphite as main components be used. A shape of the carbon materials may be any of, for example, a flake shape such as natural graphite, a spherical shape such as mesocarbon microbeads, a fibrous shape such as graphitized carbon fibers or an agglomerate of fine powders.

Also, among the above-described negative electrode active materials, because thermal stability is high and it is difficult to generate dendrites using a Li metal, it is desirable that oxides be used. As a shape of the oxides, it is desirable that a fibrous form or an agglomerate of fine powders be used.

(Negative Electrode Collector)

Examples of the negative electrode collector 122 included in the negative electrode 120 include a band-shaped member formed of a metal material such as Cu, Ni, and stainless steel. It is desirable though to use Cu as a forming material and process it into a thin film shape in that it is difficult to form an alloy with lithium and is easy to process.

Examples of the method for supporting the negative electrode active material layer 121 on the negative electrode collector 122 include a method for performing forming under pressure, a method for applying a paste-like negative electrode mixture including a negative electrode active material above the negative electrode collector 122, drying them, and pressing them, and a method for applying a paste-like negative electrode mixture including a negative electrode active material above the negative electrode collector 122, drying them, and sintering them, as in the case of the positive electrode 110.

(Solid Electrolyte Layer)

The solid electrolyte layer 130 includes the above-described solid electrolyte (the first solid electrolyte). When the solid electrolyte is included in the positive electrode active material layer 111, the solid electrolyte (the first solid electrolyte) constituting the solid electrolyte layer 130 and the solid electrolyte (the second solid electrolyte) included in the positive electrode active material layer 111 may be made of the same material. The solid electrolyte layer 130 functions as a medium for transmitting lithium ions and also functions as a separator configured to divide between the positive electrode 110 and the negative electrode 120 and prevent a short circuit.

The solid electrolyte layer 130 can be formed by depositing an inorganic solid electrolyte on a surface of the positive electrode active material layer 111 included in the positive electrode 110 described above through a sputtering method.

The solid electrolyte layer 130 can also be formed by applying a paste-like mixture including a solid electrolyte on a surface of the positive electrode active material layer 111 included in the positive electrode 110 described above and drying them. The solid electrolyte layer 130 may also be formed by performing drying, performing forming under pressure, and performing pressing through cold isostatic pressing (CIP).

In addition, the solid electrolyte layer 130 can be formed by forming a solid electrolyte to have a pellet shape in advance, causing the pellet of the solid electrolyte and the above-described positive electrode active material sheet to overlap, and pressing them uniaxially in a lamination direction. The positive electrode active material sheet serves as the positive electrode active material layer 111.

The positive electrode collector 112 is further disposed to the positive electrode active material layer 111 with respect to the obtained laminate of the positive electrode active material layer 111 and the solid electrolyte layer 130. The solid electrolyte layer 130 and the positive electrode 110 can be formed through uniaxial pressing in the lamination direction and further sintering.

The positive electrode 110 in this way is in contact with the solid electrolyte layer 130. The solid electrolyte layer 130 has a first solid electrolyte.

The positive electrode 110 has the positive electrode active material layer 111 in contact with the solid electrolyte layer 130 and the positive electrode collector 112 on which the positive electrode active material layer 111 is laminated. The positive electrode active material layer 111 includes a plurality of particles including crystals of a lithium metal composite oxide (that is, a positive electrode active material which is an aspect of the present invention) and a solid electrolyte (a second solid electrolyte) filling between the plurality of particles and in contact with the particles.

The solid electrolyte and the particles included in the positive electrode active material layer 111 are in contact with the solid electrolyte layer 130. That is to say, the particles included in the positive electrode active material layer 111 are in contact with the solid electrolyte and the solid electrolyte layer 130 included in the positive electrode active material layer 111.

It is not necessary that all of the particles (the positive electrode active material) included in the positive electrode active material layer 111 be in contact with the solid electrolyte and the solid electrolyte layer 130 included in the positive electrode active material layer 111.

The positive electrode active material included in the positive electrode active material layer 111 is in contact with the solid electrolyte included in the positive electrode active material layer 111. Thus, the positive electrode active material included in the positive electrode active material layer 111 is brought into conduction with the solid electrolyte included in the positive electrode active material layer 111. Furthermore, the positive electrode active material included in the positive electrode active material layer 111 is in contact with the solid electrolyte layer 130. Thus, the positive electrode active material included in the positive electrode active material layer 111 is brought into conduction with the solid electrolyte layer 130. In addition, the solid electrolyte included in the positive electrode active material layer 111 is in contact with the solid electrolyte layer 130. Thus, the solid electrolyte included in the positive electrode active material layer 111 is brought into conduction with the solid electrolyte layer 130.

Thus, the positive electrode active material included in the positive electrode active material layer 111 is directly or indirectly brought into conduction with the solid electrolyte layer 130.

The laminate 100 can be manufactured by laminating the negative electrode 120 on the solid electrolyte layer 130 provided above the positive electrode 110 as described above in a posture in which the negative electrode electrolyte layer121 is in contact with a surface of the solid electrolyte layer 130 using a known method. Thus, the solid electrolyte layer 130 is in contact with and brought in conduction with the negative electrode active material layer 121.

As described above, the obtained all-solid-state lithium-ion battery 100 is provided by bringing the solid electrolyte layer 130 into contact with the positive electrode 110 and the negative electrode 120 so that the positive electrode 110 and the negative electrode 120 are not short-circuited. The provided all-solid-state lithium-ion battery 100 is charged by being connected to an external power supply and applying a negative potential to the positive electrode 110 and a positive potential to the negative electrode 120.

Moreover, the charged all-solid-state lithium-ion battery 100 is discharged by connecting a discharge circuit to the positive electrode 110 and the negative electrode 120 and supplying electricity to the discharge circuit.

According to the positive electrode active material for an all-solid-state lithium-ion battery constituted as described above, exchange of lithium ions between the positive electrode and the solid electrolyte is smoothly performed and battery performance can be improved.

According to the electrode constituted as described above, since the above-described positive electrode active material for an all-solid-state lithium-ion battery is provided, it is possible to improve the battery performance of the all-solid-state lithium-ion battery.

According to the all-solid-state lithium-ion battery constituted as described above, since the above-described positive electrode active material for an all-solid-state lithium-ion battery is provided, excellent battery performance is exhibited.

In one aspect, the present invention also includes the following aspects.

(1-1) A positive electrode active material for an all-solid-state lithium-ion battery which includes particles including crystals of a lithium metal composite oxide, wherein the lithium metal composite oxide has a layered structure and includes at least Li and a transition metal, when particle diameters in which a cumulative proportion from a small particle side are 10%, 50%, and 90% with respect to a cumulative particle size distribution based on a volume measured through a laser diffraction type particle size distribution measurement are assumed to be D10, D50, and D90, the particles are formed so that a relational expression $0.91 \leq (D90-D10)/D50 \leq 11.0$ holds, and the crystals are formed so that a ratio $\alpha/\beta$ between a crystallite size $\alpha$ at a peak in the range of $2\theta=18.7\pm2°$ and a crystallite size $\beta$ at a peak in the range of $2\theta=44.6\pm2°$ is 1.0 or more in an X-ray diffraction measurement using CuKa radiation.

(1-2) A positive electrode active material for an all-solid-state lithium-ion battery which includes particles including crystals of a lithium metal composite oxide, wherein the lithium metal composite oxide has a layered structure and includes at least Li and a transition metal, when particle diameters in which a cumulative proportion from a small particle side are 10%, 50%, and 90% with respect to a cumulative particle size distribution based on a volume measured through a laser diffraction type particle size distribution measurement are assumed to be D10, D50, and D90, the particles are formed so that a relational expression $0.91 \leq (D90-D10)/D50 \leq 10.0$ holds, and the crystals are formed so that a ratio $\alpha/\beta$ between a crystallite size $\alpha$ at a peak in the range of $2\theta=18.7\pm2°$ and a crystallite size $\beta$ at a peak in the range of $2\theta=44.6\pm2°$ is 1.0 or more in an X-ray diffraction measurement using CuKa radiation.

(1-3) The positive electrode active material for an all-solid-state lithium-ion battery according to (1-2) or (1-2) which is used for an all-solid-state lithium-ion battery including an oxide solid electrolyte.

(2-1) Use of particles which includes crystals of a lithium metal composite oxide for an all-solid-state lithium-ion battery, wherein the lithium metal composite oxide has a layered structure and includes at least Li and a transition metal, when particle diameters in which a cumulative proportion from a small particle side are 10%, 50%, and 90% with respect to a cumulative particle size distribution based on a volume measured through a laser diffraction type particle size distribution measurement are assumed to be D10, D50, and D90, the particles are formed so that a relational expression $(D90-D10)/D50 \geq 0.90$ holds, and the crystals are formed so that a ratio $\alpha/\beta$ between a crystallite size $\alpha$ at a peak in the range of $2\theta=18.7\pm2°$ and a crystallite size $\beta$ at a peak in the range of $2\theta=44.6\pm2°$ is 1.0 or more in an X-ray diffraction measurement using CuKa radiation.

(2-1-1) The use accoding to (2-1) for an all-solid-state lithium-ion battery which includes an oxide solid electrolyte as a solid electrolyte.

(2-1-2) The use according to (2-1) or (2-1-1), wherein a relational expression $0.91 \leq (D90-D10)/D50 \leq 11.0$ holds.

(2-1-3) The use according to (2-1) or (2-1-1), wherein a relational expression $0.91 \leq (D90-D10)/D50 \leq 10.0$ holds.

(2-2) Use of particles which include crystals of a lithium metal composite oxide for a positive electrode active material for an all-solid-state lithium-ion battery, wherein the lithium metal composite oxide has a layered structure and includes at least Li and a transition metal, when particle diameters in which a cumulative proportion from a small particle side are 10%, 50%, and 90% with respect to a cumulative particle size distribution based on a volume measured through a laser diffraction type particle size distribution measurement are assumed to be D10, D50, and D90, the particles are formed so that a relational expression $(D90-D10)/D50 \geq 0.90$ holds, and the crystals are formed so that a ratio $\alpha/\beta$ between a crystallite size $\alpha$ at a peak in the range of $2\theta=18.7\pm2°$ and a crystallite size $\beta$ at a peak in the range of $2\theta=44.6\pm2°$ is 1.0 or more in an X-ray diffraction measurement using CuKa radiation.

(2-2-1) The use according to (2-2) for an all-solid-state lithium-ion battery which includes an oxide solid electrolyte as a solid electrolyte.

(2-2-2) The use according to (2-2) or (2-2-1), wherein a relational expression $0.91 \leq (D90-D10)/D50 \leq 11.0$ holds.

(2-2-3) The use according to (2-2) or (2-2-1), wherein a relational expression $0.91 \leq (D90-D10)/D50 \leq 10.0$ holds.

(2-3) Use of particles which includes crystals of a lithium metal composite oxide for a positive electrode for an all-solid-state lithium-ion battery, wherein the lithium metal composite oxide has a layered structure and includes at least Li and a transition metal, when particle diameters in which a cumulative proportion from a small particle side are 10%, 50%, and 90% with respect to a cumulative particle size distribution based on a volume measured through a laser diffraction type particle size distribution measurement are assumed to be D10, D50, and D90, the particles are formed so that a relational expression $(D90-D10)/D50 \geq 0.90$ holds, and the crystals are formed so that a ratio $\alpha/\beta$ between a crystallite size $\alpha$ at a peak in the range of $2\theta=18.7\pm2°$ and a crystallite size $\beta$ at a peak in the range of $2\theta=44.6\pm2°$ is 1.0 or more in an X-ray diffraction measurement using CuKa radiation.

(2-3-1) The use according to (2-3) for an all-solid-state lithium-ion battery which includes an oxide solid electrolyte as a solid electrolyte.

(2-3-2) The use according to (2-3) or (2-3-1), wherein a relational expression $0.91 \leq (D90-D10)/D50 \leq 11.0$ holds.

(2-3-3) The use accoding to (2-3) or (2-3-1), wherein a relational expression $0.91 \leq (D90-D10)/D50 \leq 10.0$ holds.

(2-4) Use of particles which include crystals of a lithium metal composite oxide for manufacturing an all-solid-state lithium-ion battery, wherein the lithium metal composite oxide has a layered structure and includes at least Li and a transition metal, when particle diameters in which a cumulative proportion from a small particle side are 10%, 50%, and 90% with respect to a cumulative particle size distribution based on a volume measured through a laser diffraction type particle size distribution measurement are assumed to be D10, D50, and D90, the particles are formed so that a relational expression $(D90-D10)/D50 \geq 0.90$ holds, and the crystals are formed so that a ratio $\alpha/\beta$ between a crystallite size $\alpha$ at a peak in the range of $2\theta=18.7 \pm 2°$ and a crystallite size $\beta$ at a peak in the range of $2\theta=44.6 \pm 2°$ is 1.0 or more in an X-ray diffraction measurement using CuKa radiation.

(2-4-1) The use according to (2-4) for an all-solid-state lithium-ion battery which includes an oxide solid electrolyte as a solid electrolyte.

(2-4-2) The use according to (2-4) o r(2-4-1), wherein a relational expression $0.91 \leq (D90-D10)/D50 \leq 11.0$ holds.

(2-4-3) The use according to (2-4) or (2-4-1), wherein a relational expression $0.91 \leq (D90-D10)/D50 \leq 10.0$ holds.

(2-5) Use of particles which include particles of a lithium metal composite oxide for manufacturing a positive electrode active material for an all-solid-state lithium-ion battery, wherein the lithium metal composite oxide has a layered structure and includes at least Li and a transition metal, when particle diameters in which a cumulative proportion from a small particle side are 10%, 50%, and 90% with respect to a cumulative particle size distribution based on a volume measured through a laser diffraction type particle size distribution measurement are assumed to be D10, D50, and D90, the particles are formed so that a relational expression $(D90-D10)/D50 \geq 0.90$ holds, and the crystals are formed so that a ratio $\alpha/\beta$ between a crystallite size $\alpha$ at a peak in the range of $2\theta=18.7 \pm 2°$ and a crystallite size $\beta$ at a peak in the range of $2\theta=44.6 \pm 2°$ is 1.0 or more in an X-ray diffraction measurement using CuKa radiation.

(2-5-1) The use according to (2-5) for an all-solid-state lithium-ion battery which includes an oxide solid electrolyte as a solid electrolyte.

(2-5-2) The use according to (2-5) or (2-5-1), wherein a relational expression $0.91 \leq (D90-D10)/D50 \leq 11.0$ holds.

(2-5-3) The use according to (2-5) or (2-5-1), wherein a relational expression $0.91 \leq (D90-D10)/D50 \leq 10.0$ holds.

(2-6) Use of particles which include crystals of a lithium metal composite oxide for manufacturing a positive electrode for an all-solid-state lithium-ion battery, wherein the lithium metal composite oxide has a layered structure and includes at least Li and a transition metal, when particle diameters in which a cumulative proportion from a small particle side are 10%, 50%, and 90% with respect to a cumulative particle size distribution based on a volume measured through a laser diffraction type particle size distribution measurement are assumed to be D10, D50, and D90, the particles are formed so that a relational expression $(D90-D10)/D50 \geq 0.90$ holds, and the crystals are formed so that a ratio $\alpha/\beta$ between a crystallite size $\alpha$ at a peak in the range of $2\theta=18.7 \pm 2°$ and a crystallite size $\beta$ at a peak in the range of $2\theta=44.6 \pm 2°$ is 1.0 or more in an X-ray diffraction measurement using CuKa radiation.

(2-6-1) The use according to (2-6) for an all-solid-state lithium-ion battery which includes an oxide solid electrolyte as a solid electrolyte.

(2-6-2) The use according to (2-6) or (2-6-1), wherein a relational expression $0.91 \leq (D90-D10)/D50 \leq 11.0$ holds.

(2-6-3) The use according to (2-6) or (2-6-1), wherein a relational expression $0.91 \leq (D90-D10)/D50 \leq 10.0$ holds.

(3-1) A positive electrode active material in contact with a solid electrolyte layer, wherein the positive electrode active material includes particles including crystals of a lithium metal composite oxide, the lithium metal composite oxide has a layered structure and includes at least Li and a transition metal, when particle diameters in which a cumulative proportion from a small particle side are 10%, 50%, and 90% with respect to a cumulative particle size distribution based on a volume measured through a laser diffraction type particle size distribution measurement are assumed to be D10, D50, and D90, the particles are formed so that a relational expression $(D90-D10)/D50 \geq 0.90$ holds, and the crystals are formed so that a ratio $\alpha/\beta$ between a crystallite size $\alpha$ at a peak in the range of $2\theta=18.7 \pm 2°$ and a crystallite size $\beta$ at a peak in the range of $2\theta=44.6 \pm 2°$ is 1.0 or more in an X-ray diffraction measurement using CuKa radiation.

(3-1-1) The positive electrode active material according to (3-1), wherein the solid electrolyte layer includes an oxide solid electrolyte.

(3-1-2) The positive electrode active material according to (3-1) or (3-1-1), wherein a relational expression $0.91 \leq (D90-D10)/D50 \leq 11.0$ holds.

(3-1-3) The positive electrode active material according to (3-1) or (3-1-1), wherein a relational expression $0.91 \leq (D90-D10)/D50 \leq 10.0$ holds.

(3-2) A positive electrode in contact with a solid electrolyte layer, wherein the positive electrode includes an electrode active material layer in contact with the solid electrolyte layer and a current collector on which the positive electrode active material layer is laminated, the positive electrode active material layer includes particles including crystals of a lithium metal composite oxide, the lithium metal composite oxide has a layered structure and includes at least Li and a transition metal, when particle diameters in which a cumulative proportion from a small particle side are 10%, 50%, and 90% with respect to a cumulative particle size distribution based on a volume measured through a laser diffraction type particle size distribution measurement are assumed to be D10, D50, and D90, the particles are formed so that a relational expression (D90-D10)/D50≥0.90 holds, and the crystals are formed so that a ratio $\alpha/\beta$ between a crystallite size $\alpha$ at a peak in the range of $2\theta=18.7\pm2°$ and a crystallite size $\beta$ at a peak in the range of $2\theta=44.6\pm2°$ is 1.0 or more in an X-ray diffraction measurement using CuKa radiation.

(3-2-1) The positive electrode according to (3-2), wherein the solid electrolyte layer includes an oxide solid electrolyte.

(3-2-2) The positive electrode according to (3-2) or (3-2-1), wherein a relational expression 0.91≤(D90-D10)/D50≤11.0 holds.

(3-2-3) The positive electrode according to (3-2) or (3-2-1), wherein a relational expression 0.91≤(D90-D10)/D50≤10.0 holds.

(3-3) A positive electrode in contact with a solid electrolyte layer, wherein the positive electrode includes a positive electrode active material layer in contact with the solid electrolyte layer and a current collector on which the positive electrode active material layer is laminated, the positive electrode active material layer includes a plurality of particles including crystals of a lithium metal composite oxide and a solid electrolyte filling between the plurality of particles and in contact with the particles, the lithium metal composite oxide has a layered structure and includes at least Li and a transition metal, when particle diameters in which a cumulative proportion from a small particle side are 10%, 50%, and 90% with respect to a cumulative particle size distribution based on a volume measured through a laser diffraction type particle size distribution measurement are assumed to be D10, D50, and D90, the particles are formed so that a relational expression (D90-D10)/D50≥0.90 holds, and the crystals are formed so that a ratio $\alpha/\beta$ between a crystallite size $\alpha$ at a peak in the range of $2\theta=18.7\pm2°$ and a crystallite size $\beta$ at a peak in the range of $2\theta=44.6\pm2°$ is 1.0 or more in an X-ray diffraction measurement using CuKa radiation.

(3-3-1) The positive electrode according to (3-3), wherein the solid electrolyte layer includes an oxide solid electrolyte.

(3-3-2) The positive electrode according to (3-3) or (3-3-1), wherein the solid electrolyte included in the positive electrode active material layer is an oxide solid electrolyte.

(3-3-3) The positive electrode according to any one of (3-3), (3-3-1), and (3-3-2), wherein a relational expression 0.91≤(D90-D10)/D50≤11.0 holds.

(3-3-4) The positive electrode according to any one of (3-3), (3-3-1), and (3-3-2), wherein a relational expression 0.91≤(D90-D10)/D50≤10.0 holds.

(3-4) A positive electrode in contact with a solid electrolyte layer, wherein the positive electrode includes a positive electrode active material layer in contact with the solid electrolyte layer and a current collector on which the positive electrode active material layer is laminated, the positive electrode active material layer includes a plurality of particles including crystals of a lithium metal composite oxide and a solid electrolyte filling between the plurality of particles and in contact with the particles, the solid electrolyte and the particles included in the positive electrode active material layer are in contact with the solid electrolyte layer, the lithium metal composite oxide has a layered structure and includes at least Li and a transition metal, when particle diameters in which a cumulative proportion from a small particle side are 10%, 50%, and 90% with respect to a cumulative particle size distribution based on a volume measured through a laser diffraction type particle size distribution measurement are assumed to be D10, D50, and D90, the particles are formed so that a relational expression (D90-D10)/D50≥0.90 holds, and the crystals are formed so that a ratio $\alpha/\beta$ between a crystallite size $\alpha$ at a peak in the range of $2\theta=18.7\pm2°$ and a crystallite size $\beta$ at a peak in the range of $2\theta=44.6\pm2°$ is 1.0 or more in an X-ray diffraction measurement using CuKa radiation.

(3-4-1) The positive electrode according to (3-4), wherein the solid electrolyte layer includes an oxide solid electrolyte.

(3-4-2) The positive electrode according to (3-4) or (3-4-1), wherein the solid electrolyte included in the positive electrode active material layer is an oxide solid electrolyte.

(3-4-3) The positive electrode according to any one of (3-4), (3-4-1), and (3-4-2), wherein a relational expression 0.91≤(D90-D10)/D50≤11.0 holds.

(3-4-4) The positive electrode according to any one of (3-4), (3-4-1), and (3-4-2), wherein a relational expression 0.91≤(D90-D10)/D50≤10.0 holds.

(3-5) An all-solid-state lithium-ion battery including the positive electrode active material according to any one of (3-1), (3-1-1), (3-1-2), and (3-2-3) or the positive electrode according to any one of (3-2), (3-2-1), (3-2-2), (3-2-3), (3-3-1), (3-3-2), (3-3-3), (3-3-4), (3-4-1), (3-4-2), (3-4-3), and (3-4-4).

(4-1) A method for charging an all-solid-state lithium-ion battery which includes providing a solid electrolyte layer such that the solid electrolyte layer is in contact with a positive electrode and a negative electrode so that a positive electrode and a negative electrode are not short-circuited and applying a negative potential to the positive electrode and a positive potential to the negative electrode using an external power supply, wherein the positive electrode includes particles including crystals of a lithium metal composite oxide, the lithium metal composite oxide has a layered structure and includes at least Li and a transition metal, when particle diameters in which a cumulative proportion from a small particle side are 10%, 50%, and 90% with respect to a cumulative particle size distribution based on a volume measured through a laser diffraction type particle size distribution measurement are assumed to be D10, D50, and D90, the particles are formed so that a relational expression (D90-D10)/D50$\geq$0.90 holds, and the crystals are formed so that a ratio $\alpha/\beta$ between a crystallite size $\alpha$ at a peak in the range of $2\theta=18.7\pm2°$ and a crystallite size $\beta$ at a peak in the range of $2\theta=44.6\pm2°$ is 1.0 or more in an X-ray diffraction measurement using CuKa radiation.

(4-1-1) The method for charging an all-solid-state lithium-ion battery according to (4-1), wherein the solid electrolyte layer includes an oxide solid electrolyte.

(4-1-2) The method for charging an all-solid-state lithium-ion battery according to (4-1) or (4-1-1), wherein a relational expression 0.91$\leq$(D90-D10)/D50$\leq$11.0 holds.

(4-1-3) The method for charging an all-solid-state lithium-ion battery according to (4-1) or (4-1-1), a relational expression 0.91$\leq$(D90-D10)/D50$\leq$10.0 holds.

(4-2) A method for discharing an all-solid-state lithium-ion battery including providing a solid electrolyte layer such that the solid electrolyte layer is in contact with a positive electrode and a negative electrode so that a positive electrode and a negative electrode are not short-circuited, charging the all-solid-state lithium-ion battery by applying a negative potential to the positive electrode and a positive potential to the negative electrode using an external power supply, and connecting a discharge circuit to the positive electrode and the negative electrode of the charged all-solid-state lithium-ion battery, wherein the positive electrode includes particles including crystals of a lithium metal composite oxide, the lithium metal composite oxide has a layered structure and includes at least Li and a transition metal, when particle diameters in which a cumulative proportion from a small particle side are 10%, 50%, and 90% with respect to a cumulative particle size distribution based on a volume measured through a laser diffraction type particle size distribution measurement are assumed to be D10, D50, and D90, the particles are formed so that a relational expression (D90-D10)/D50$\geq$0.90 holds, and the crystals are formed so that a ratio $\alpha/\beta$ between a crystallite size $\alpha$ at a peak in the range of $2\theta=18.7\pm2°$ and a crystallite size $\beta$ at a peak in the range of $2\theta=44.6\pm2°$ is 1.0 or more in an X-ray diffraction measurement using CuKa radiation.

(4-2-1) The method for discharging an all-solid-state lithium-ion battery according to (3-2), wherein the solid electrolyte layer includes an oxide solid electrolyte.

(4-2-2) The method for discharging an all-solid-state lithium-ion battery according to (4-2) or (4-2-1), wherein a relational expression 0.91$\leq$(D90-D10)/D50$\leq$11.0 holds.

(4-2-3) The method for discharging an all-solid-state lithium-ion battery according to (4-2) or (4-2-1), wherein a relational expression 0.91$\leq$(D90-D10)/D50$\leq$10.0 holds.

Although the preferred embodiments according the present invention have been described above with reference to the accompanying drawings, the present invention is not limited to the related examples. The shapes, combinations, and the like of the constituent elements illustrated in the above-described examples are merely examples and can be variously changed on the basis of design requirements and the like without departing from the gist of the present invention.

[Examples]

Although the present invention will be described below with reference to examples, the present invention is not limited to these examples.

<Composition Analysis of Positive Electrode Active Material>

In a composition analysis of a positive electrode active material manufactured through the following method, particles of the obtained positive electrode active material were dissolved in hydrochloric acid and then measurement was performed using an inductively coupled plasma emission spectrometer (SPS3000 manufactured by SII Nano Technology Inc.).

<Measurement of $(D_{90}-D_{10})/D_{50}$>

A ratio $(D_{90}/D_{10})$ between a 90% cumulative volume particle size $D_{90}$ and a 10% cumulative volume particle size $D_{10}$ of a positive electrode active material was calculated through the following method.

First, a dispersion solution was obtained by adding 0.1 g of a positive electrode active material to 50 ml of a 0.2 mass% aqueous sodium hexametaphosphate solution and dispersing powders of the positive electrode active material.

Subsequently, a cumulative particle size distribution curve based on a volume was obtained by measuring a particle size distribution of the obtained dispersion solution using a laser diffraction scattering particle size distribution measurement device (Micro Truck MT3300EXII manufactured by MicrotracBEL Corp.).

In the obtained cumulative particle size distribution curve, a value of a particle diameter when viewed a fine particle side at the time of 10% accumulation was assumed to be a 10% cumulative volume particle size $D_{10}$ (unit: $\mu$m), a value of a particle diameter when viewed from a fine particle side at the time of 50% accumulation was assumed to be a 50% cumulative volume particle size $D_{50}$ (unit: $\mu$m), a value of a particle diameter when viewed from a fine particle side at the time of 90% accumulation was assumed to be a 90% cumulative volume particle size $D_{90}$ (unit: $\mu$m), and a ratio $(D_{90}-D_{10})/D_{50}$ was calculated.

<Crystallite Size Measurement>

A powder X-ray diffraction measurement of a positive electrode active material was performed using an X-ray diffraction measurement device (X'Pert PRO manufactured by PANalytical).

A powder X-ray diffraction pattern was obtained by filling a dedicated substrate with the obtained positive electrode active material and performing measurement under the conditions of a diffraction angle 2$\theta$=10° to 90°, a sampling width of 0.02°, and a scan speed of 4°/min using a CuKa radiation source.

Half-widths of a peak A appearing in the range of 2$\theta$=18.7°$\pm$2° and a peak B appearing in the range of 2$\theta$=44.6°$\pm$2° were obtained from a powder X-ray diffraction pattern obtained through a powder X-ray diffraction measurement using powder X-ray diffraction total pattern analysis software JADE5. A crystallite size $\alpha$ and a crystallite size $\beta$ were calculated through the Scherrer equation using the obtained half-widths.

A crystallite size ratio $\alpha/\beta$ was obtained from the obtained crystallite sizes $\alpha$ and $\beta$.

<Example 1>

(Manufacturing of Positive Electrode Active Material 1)

Water was poured into a reaction tank including a stirrer and an overflow pipe and then an aqueous sodium hydroxide solution was added, and a liquid temperature was maintained at 50 °C.

A mixed raw material solution was prepared by mixing an aqueous nickel sulfate solution, an aqueous cobalt sulfate solution, and an aqueous manganese sulfate solution at a ratio of an atomic ratio of nickel atoms, cobalt atoms, and manganese atoms of 0.50:0.20:0.30.

Subsequently, the mixed raw material solution and an aqueous ammonium sulfate solution were added continuously added into the reaction tank while stirred as complexing agents and nitrogen gas was caused to continuously pass through the reaction tank. Nickel-cobalt-manganese composite hydroxide particles were obtained by adding an aqueous sodium hydroxide solution dropwise at appropriate times so that a pH of the solution in the reaction tank was 11.1. Nickel-cobalt-manganese composite hydroxide 1 was obtained by washing the nickel-cobalt-manganese composite hydroxide particles, removing water from the nickel-cobalt-manganese composite hydroxide particles using a centrifuge, washing the obtained solid, removing water from the obtained solid, and drying the obtained solid at 120 °C.

A positive electrode active material 1 was obtained by weighing and mixing nickel-cobalt-manganese composite hydroxide particles 1 and lithium hydroxide powders at a ratio of Li/(Ni+Co+Mn)=1.05 and calcining the mixed nickel-cobalt-manganese composite hydroxide particles 1 and lithium hydroxide powders at 970 °C for four hours in an air atmosphere.

(Evaluation of Positive Electrode Active Material 1)

Compositional analysis of the positive electrode active material 1 was performed, and when the composition was made to correspond to Composition Formula (1), x = 0.05, y = 0.50, z = 0.30, and w = 0 were obtained.

As a result of SEM observation of the positive electrode active material 1, primary particles and secondary particles were included in the positive electrode active material 1 and single particles was not included in the positive electrode active material 1.

When a particle size distribution of the positive electrode active material 1 was measured, Dso was 10.86 and $(D_{90}-D_{10})/D_{50}$ was 1.16.

When the positive electrode active material 1 was subjected to an X-ray diffraction measurement, a crystallite size ratio $\alpha/\beta$ of the positive electrode active material 1 was 1.10.

<Example 2>

(Manufacturing of Positive Electrode Active Material 2)

Water was poured into a reaction tank including a stirrer and an overflow pipe and then an aqueous sodium hydroxide solution was added, and a liquid temperature was maintained at 50 °C.

A mixed raw material solution 2 was prepared by mixing an aqueous nickel sulfate solution, an aqueous cobalt sulfate solution, and an aqueous manganese sulfate solution at a ratio of an atomic ratio of nickel atoms, cobalt atoms, and manganese atoms of 0.55:0.20:0.25.

Subsequently, the mixed raw material solution and an aqueous ammonium sulfate solution were added continuously added into the reaction tank while stirred as complexing agents. Nickel-cobalt-manganese composite hydroxide particles were obtained by adding an aqueous sodium hydroxide solution dropwise at appropriate times so that a pH of the solution in the reaction tank was 12.0. Nickel-cobalt-manganese composite hydroxide 2 was obtained by washing the obtained nickel-cobalt-manganese composite hydroxide particles, removing water from the obtained nickel-cobalt-manganese composite hydroxide particles using a centrifuge, washing the obtained solid, removing water from the obtained solid, and drying the obtained solid at 120 °C.

Nickel-cobalt-manganese composite hydroxide particles 2 and lithium hydroxide monohydrate powders were weighed and mixed at a ratio of Li/(Ni+Co+Mn)=1.03. A lithium metal composite oxide was obtained by calcining the obtained mixture at 650 °C for five hours in an oxygen atmosphere, calcining the obtained mixture at 960 °C for five hours in an oxygen atmosphere, and calcining the obtained mixture at 400 °C for five hours in an air atmosphere. The obtained lithium metal composite oxide was used as a positive electrode active material 2.

(Evaluation of Positive Electrode Active Material 2)

Compositional analysis of the positive electrode active material 2 was performed, and when the composition was made to correspond to Composition Formula (1), x = 0.03, y = 0.20, z = 0.25, and w = 0 were obtained.

As a result of SEM observation of the positive electrode active material 2, single particles were included in the positive electrode active material 2.

When a particle size distribution of the positive electrode active material 2 was measured, D50 was 3.52 and $(D_{90}-D_{10})/D_{50}$ was 0.91.

When the positive electrode active material 2 was subjected to an X-ray diffraction measurement, a crystallite size ratio $\alpha/\beta$ of the positive electrode active material 2 was 1.89.

<Example 3>

(Manufacturing of Positive Electrode Active Material 3)

Nickel-cobalt-manganese composite hydroxide particles 2 and lithium hydroxide monohydrate powders were weighed and mixed at a ratio of Li/(Ni+Co+Mn)=1.05. A lithium metal composite oxide was obtained by calcining the obtained mixture at 650 °C for five hours in an oxygen atmosphere, calcining the obtained mixture at 1015 °C for five hours in an air atmosphere, and calcining the obtained mixture at 400 °C for five hours in an oxygen atmosphere.

The obtained lithium metal composite oxide was pulverized using a pin mill type pulverizing machine (Impact Mill AVIS 100 manufactured by Mill System Co., Ltd.) and then sieved using a turbo screener (TS 125×200 type manufactured by Freund Turbo Co., Ltd.). Operation conditions of the pin mill type pulverizing machine and the turbo screener were as follows.

(Operation Conditions of Pin Mill Type Pulverizing Machine)

Number of rotations: 16000 rpm
Supply rate: 8 kg/hr
(Operation Conditions of Turbo Screener)
Screen to be used: 45 μm mesh
Number of blade rotations: 1800 rpm
Supply rate: 50 kg/hr

A positive electrode active material 3 was obtained by collecting powders passing through a screen in the turbo screener.

(Evaluation of Positive Electrode Active Material 3)

Compositional analysis of the positive electrode active material 3 was performed, and when the composition was made to correspond to Composition Formula (1), x = 0.05, y = 0.20, z = 0.25, and w = 0 were obtained.
As a result of SEM observation of the positive electrode active material 3, single particles were included in the positive electrode active material 3.
When a particle size distribution of the positive electrode active material 3 was measured, $D_{50}$ was 5.41 and $(D_{90}-D_{10})/D_{50}$ was 0.90.
When the positive electrode active material 3 was subjected to an X-ray diffraction measurement, a crystallite size ratio $\alpha/\beta$ of the positive electrode active material 3 was 1.94.

<Example 4>

(Manufacturing of Positive Electrode Active Material 4)

Nickel-cobalt-manganese composite hydroxide 4 was obtained as in Example 1 except that a mixed raw material solution was obtained by mixing an aqueous nickel sulfate solution, an aqueous cobalt sulfate solution, and an aqueous manganese sulfate solution at a ratio of an atomic ratio of nickel atoms, cobalt atoms, and manganese atoms of 0.88:0.08:0.04 and an aqueous sodium hydroxide solution was added dropwise at appropriate times so that a pH of the solution in a reaction tank was 12.4.
Nickel-cobalt-manganese composite hydroxide 4, lithium hydroxide powders, and potassium sulfate powders were weighed and mixed at a ratio of Li/(Ni+Co+Mn)=1.05 and $K_2SO_4/(LiOH+K_2SO_4)$=0.1 (mol/mol). A mixture 4 including a lithium metal composite oxide was obtained by calcining the obtained mixture at 800 °C for ten hours in an oxygen atmosphere.
The mixture 4 and pure water at 5 °C were mixed at a ratio at which a ratio of the mixture 4 to a total amount of the mixture 4 and the pure water was 30 mass% and the obtained slurry was stirred for ten minutes.
Water was removed from the slurry and the obtained solid substance was rinsed through pure water at 5 °C twice the mass of the mixture 4 used for preparing the slurry. A positive electrode active material 4 was obtained by removing water from the solid substance again, vacuum-drying the solid substance at 80 °C for 15 hours, and vacuum-drying the solid substance at 150 °C for eight hours.

(Evaluation of Positive Electrode Active Material 4)

Compositional analysis of the positive electrode active material 4 was performed, and when the composition was made to correspond to Composition Formula (1), x = 0.05, y = 0.08, z = 0.04, and w = 0 were obtained.
As a result of SEM observation of the positive electrode active material 4, single particles were included in the positive electrode active material 4.
When a particle size distribution of the positive electrode active material 4 was measured, Dso was 5.79 and $(D_{90}-D_{10})/D_{50}$ was 1.78.
When the positive electrode active material 4 was subjected to an X-ray diffraction measurement, a crystallite size ratio $\alpha/\beta$ of the positive electrode active material 4 was 1.84.

<Example 5>

(Manufacturing of Positive Electrode Active Material 5)

A precipitate including nickel-cobalt-manganese composite hydroxide was obtained as in Example 4 except that an aqueous sodium hydroxide solution was added dropwise at appropriate times so that a ph of the solution in a reaction tank is 11.2 and a liquid temperature was maintained at 70 °C.
Nickel-cobalt-manganese composite hydroxide 5 was obtained by pulverizing the obtained precipitate using a counter jet mill (100AFG type manufactured by Hosokawa Micron Corporation). Operation conditions of the counter jet mill were as follows.

(Operation Conditions of Counter Jet Mill)

Pulverizing pressure: 0.59 MPa
Number of sieving rotations: 17000 rpm
Supply rate: 2 kg/hr

A positive electrode active material 5 was obtained as in Example 4 except that nickel-cobalt-manganese composite hydroxide 5, lithium hydroxide powders, and potassium sulfate powders were weighed and mixed at a ratio of Li/(Ni+Co+Mn)=1.20 and $K_2SO_4$/(LiOH+$K_2SO_4$)=0.1 (mol/mol).

(Evaluation of Positive Electrode Active Material 5)

Compositional analysis of the positive electrode active material 5 was performed, and when the composition was made to correspond to Composition Formula (1), x = 0.20, y = 0.08, z = 0.04, and w = 0 were obtained.
As a result of SEM observation of the positive electrode active material 5, single particles were included in the positive electrode active material 5.
When a particle size distribution of the positive electrode active material 5 was measured, Dso was 3.32 and $(D_{90}$-$D_{10})$/$D_{50}$ was 6.32.
When the positive electrode active material 5 was subjected to an X-ray diffraction measurement, a crystallite size ratio $\alpha/\beta$ of the positive electrode active material 5 was 1.94.

<Example 6>

(Manufacturing of Positive Electrode Active Material 6)

Nickel-cobalt-manganese composite hydroxide 6 was obtained as in Example 4 except that a mixed raw material solution was obtained by mixing an aqueous nickel sulfate solution, an aqueous cobalt sulfate solution, and an aqueous manganese sulfate solution at a ratio of an atomic ratio of nickel atoms, cobalt atoms, and manganese atoms of 0.91:0.07:0.02 and an aqueous sodium hydroxide solution was added dropwise at appropriate times so that a pH of the solution in a reaction tank was 12.3.
Nickel-cobalt-manganese composite hydroxide 6, lithium hydroxide powders, and potassium sulfate powders were weighed and mixed at a ratio of Li/(Ni+Co+Mn)=1.26 and $K_2SO_4$/(LiOH+$K_2SO_4$)=0.1 (mol/mol). A mixture 6 including a lithium metal composite oxide was obtained by calcining the obtained mixture at 790 °C for ten hours in an oxygen atmosphere.
The mixture 6 and pure water at 5 °C were mixed at a ratio at which a ratio of the mixture 6 to a total amount of the mixture 6 and the pure water was 30 mass% and the obtained slurry was stirred for ten minutes.
Water was removed from the slurry and the obtained solid substance was rinsed through pure water at 5 °C twice the mass of the mixture 4 used for preparing the slurry. Water was removed from the solid substance again and the solid substance was vacuum-dried at 80 °C for 15 hours and then vacuum-dried at 150 °C for eight hours.
A positive electrode active material 6 was obtained by sieving the obtained powders using a turbo screener (manufactured by Freund Turbo Co., Ltd.). Operation conditions and sieving conditions of the turbo screener were the same as in Example 3.

(Evaluation of Positive Electrode Active Material 6)

Compositional analysis of the positive electrode active material 6 was performed, and when the composition was made to correspond to Composition Formula (1), x = 0.02, y = 0.07, z = 0.02, and w = 0 were obtained.
As a result of SEM observation of the positive electrode active material 6, single particles were included in the positive electrode active material 6.
When a particle size distribution of the positive electrode active material 6 was measured, Dso was 4.13 and $(D_{90}$—$D_{10})$/$D_{50}$ was 1.33.
When the positive electrode active material 6 was subjected to an X-ray diffraction measurement, a crystallite size ratio $\alpha/\beta$ of the positive electrode active material 6 was 2.01.

<Comparative Example 1>

(Manufacturing of Positive Electrode Active Material E1)

A commercially available $LiCoO_2$ was evaluated as a positive electrode active material E1. As the positive electrode active material E1, a commercially available $LiCoO_2$ having a particle size distribution in the range of D50=5

μm±2 μm was used.

(Evaluation of Positive Electrode Active Material E1)

As a result of SEM observation of the positive electrode active material E1, single particles were included in the positive electrode active material E1.

When a particle size distribution of the positive electrode active material E1 was measured, Dso was 6.81 and $(D_{90}—D_{10})/D_{50}$ was 1.56.

When the positive electrode active material E1 was subjected to an X-ray diffraction measurement, a crystallite size ratio $\alpha/\beta$ of the positive electrode active material E1 was 0.40.

<Comparative Example 2>

(Manufacturing of Positive Electrode Active Material E2)

A commercially available $LiNi_{0.33}Co_{0.33}Mn_{0.33}O_2$ was evaluated as a positive electrode active material E2. As the positive electrode active material E2, a commercially available $LiNi_{0.33}Co_{0.33}Mn_{0.33}O_2$ having a particle size distribution in the range of D50=5 μm±2 μm was used.

(Evaluation of Positive Electrode Active Material E2)

As a result of SEM observation of the positive electrode active material E2, primary particles and secondary particles were included in the positive electrode active material E2 and single particles were not included in the positive electrode active material E2.

When a particle size distribution of the positive electrode active material E2 was measured, $D_{50}$ was 4.79 and $(D_{90}—D_{10})/D_{50}$ was 0.89.

When the positive electrode active material E2 was subjected to an X-ray diffraction measurement, a crystallite size ratio $\alpha/\beta$ of the positive electrode active material E2 was 1.13.

<Manufacturing of All-Solid-State Lithium-Ion Battery>

(Manufacturing of Positive Electrode Active Material Sheet)

Mixed powders were obtained by mixing a positive electrode active material obtained through the above-described manufacturing method and $Li_3BO_3$ at a ratio at which the positive electrode active material obtained through the above-described manufacturing method and $Li_3BO_3$ had a composition of positive electrode active material:$Li_3BO_3$=80:20 (molar ratio). A resin binder (ethyl celulose), a plasticizer (dioctyl phthalate), and a solvent (acetone) were added to the obtained mixed powders so that the resin binder, the plasticizer, and the solvent had a composition of mixed powder:resin binder:plasticizer:solvent=100:10:10:100 (a mass ratio) and mixed using a planetary stirring and air bubble removal device.

A positive electrode mixture slurry was obtained by removing water from the obtained slurry using a planetary stirring and air bubble removal device.

A positive electrode film with a thickness of 50 μm was formed by applying the obtained positive electrode mixture slurry above a PET film using a doctor blade and drying the coated film.

A positive electrode active material sheet with a thickness of 40 μm was obtained by detaching the positive electrode film from the PET film, punching the positive electrode film to have a circle with a diameter of 14.5 mm, and uniaxially pressing the positive electrode film in a thickness direction thereof at 20MPa for one minute. $Li_3BO_3$ included in the positive electrode active material sheet functions as a solid electrolyte in contact with the positive electrode active material in the positive electrode active material sheet. Furthermore, $Li_3BO_3$ functions as a binder configured to hold the positive electrode active material in the positive electrode active material sheet.

(Manufacturing of All-Solid-State Lithium-Ion Battery)

A laminate was obtained by laminating the positive electrode active material sheet and a solid electrolyte pellet made of $Li_{6.75}La_3Zr_{1.75}Nb_{0.25}O_{12}$ (manufactured by Toshima Seisakusho Co., Ltd.) and uniaxially pressing the laminate parallel to the lamination direction. The used solid electrolyte pellet had a diameter of 14.5 mm and a thickness of 0.5 mm.

Organic components were burned off by causing the positive electrode active material sheet of the obtained laminate and a positive electrode collector (a gold foil; a thickness of 500 μm) to overlap and heating the laminate of the solid electrolyte, the positive electrode active material sheet, and the positive electrode collector at 300 °C for one hour in a state in which the laminate was pressed at 100 gf. Furthermore, a laminate of the solid electrolyte layer and the positive electrode was obtained by heating the laminate of the solid electrolyte, the positive electrode active material sheet, and the positive electrode collector to 800 °C at 5 °C/min and sintering the laminate of the solid electrolyte, the positive electrode active material sheet, and the positive electrode collector at 800 °C for one hour. The positive electrode active material sheet and the positive electrode collector constitute a positive electrode.

Subsequently, the following operations were performed in a glove box in an argon atmosphere.

A solid electrolyte layer of the laminate of the solid electrolyte layer, the positive electrode, a negative electrode (a Li foil; a thickness of 300 $\mu$m), a negative electrode collector (a stainless steel plate; a thickness of 50 $\mu$m), and a wave washer (made of stainless steel) overlap.

An all-solid-state lithium-ion battery was prepared by placing the positive electrode on a lower lid of coin-type battery R2032 parts (manufactured by Hosen Co., Ltd.), causing it and the wave washer to overlap, using it as an upper lid, and performing caulking using a caulking machine for the laminate obtained by causing the positive electrode, the negative electrode, the negative electrode collector, and the wave washer to overlap.

<Charge and Discharge Test>

A charge and discharge test was performed under the following conditions using half cells prepared through the above-described method and initial charge and discharge efficiency was calculated.

(Charge and Discharge Conditions)

Test temperature 60 °C
Maximum charging voltage 4.3 V
Charge current density 0.01 C
Discharge minimum voltage 2.0 V
Discharge current density 0.01 C
Cut off 0.002 C

(Calculation of Initial Charge and Discharge Efficiency)

Initial charge and discharge efficiency was obtained on the basis of the following calculation formula from a charge capacity and a discharge capacity at the time of charging and discharging under the foregoing conditions.

Initial charge and discharge efficiency (%)
=initial discharge capacity (mAh/g)/initial charge capacity (mAh/g)×100

<Manufacturing of Liquid-Based Lithium Secondary Battery>

(Preparation of Positive Electrode for Lithium Secondary Battery)

A paste-like positive electrode mixture was prepared by adding and kneading a positive electrode active material obtained through a manufacturing method to be described later, a conductive material (an acetylene black), and a binder (PVdF) at a ratio of a composition of positive electrode active material:conductive material:binder=92:5:3 (a mass ratio). When the positive electrode mixture was prepared, N-methyl-2-pyrrolidone was used as an organic solvent.

A positive electrode for a lithium secondary battery was obtained by applying the obtained positive electrode mixture on an Al foil with a thickness of 40 $\mu$m serving as a current collector and vacuum-drying it at 150 °C for eight hours. An electrode area of the positive electrode for a lithium secondary battery was 1.65 cm$^2$.

(Preparation of Lithium Secondary Battery (Coin Type Half Cell))

The following operations were performed in a glove box in an argon atmosphere.

The positive electrode for a lithium secondary battery prepared in "Preparation of the positive electrode for a lithium secondary battery" was placed on a lower lid of coin-type battery R2032 parts (manufactured by Hosen Co., Ltd.) so that a surface of an aluminum foil faces downward and a separator was placed thereabove. The separator was a porous film made of polyethylene.

300 $\mu$l of an electrolytic solution was injected into the laminate. A solution obtained by dissolving LiPF$_6$ in a

mixed solution with ethylene carbonate, dimethyl carbonate, and ethyl methyl carbonate of 30:35:35 (volume ratio) was used as the electrolytic solution. A concentration of $LiPF_6$ in the electrolytic solution was 1.0 mol/1.

Subsequently, a lithium secondary battery was prepared by using a metal lithium as a negative electrode, placing the negative electrode on an upper side of a laminated film separator, using it as an upper lid via a gasket, and performing caulking using a caulking machine. The obtained lithium secondary battery was an R2032 coin type half cell.

<Evaluation Results>

Evaluation results are shown in Tables 1 to 4. Tables 1 and 2 show measurement values of positive electrode active materials and Table 3 shows results of the evaluation of the physical properties of an all-solid-state lithium-ion battery using each positive electrode active material.

"Me" in "Li/Me" mentioned in Table 1 indicates an amount of remaining metals excluding Li among metals included in a lithium metal composite oxide constituting a positive electrode active material. "Me" specifically indicates a total amount of Ni, Co, Mn, and M. Furthermore, "ND" in Table 1 indicates "no data."

Also, Table 4 shows the results of evaluating the physical properties of a liquid-based lithium-ion secondary battery using each positive electrode active material. The results shown in Table 4 are reference examples.

In Table 3, an initial charge capacity was evaluated as follows and the evaluation results are shown in the "evaluation" column. In the evaluation, A and B are determined as good products and C and D are determined as defective products.

A: initial charge capacity was 100 mAh/g or more

B: initial charge capacity was 40 mAh/g or more and less than 100 mAh/h

C: initial charge capacity was 10 mAh/g or more and less than 40 mAh/h

D: initial charge capacity was less than 10 mAh/g

[Table 1]

| | Shape | Composition of lithium composite metal compound | | | | |
|---|---|---|---|---|---|---|
| | | Li/Me | Ni | Co | Mn | M |
| Example 1 | Agglomerated particle | 1.05 | 0.50 | 0.50 | 0.30 | 0 |
| Example 2 | Single particle | 1.03 | 0.55 | 0.20 | 0.25 | 0 |
| Example 3 | Single particle | 1.05 | 0.55 | 0.20 | 0.25 | 0 |
| Example 4 | Single particle | 1.05 | 0.88 | 0.08 | 0.04 | 0 |
| Example 5 | Single particle | 1.20 | 0.88 | 0.08 | 0.04 | 0 |
| Example 6 | Single particle | 1.26 | 0.91 | 0.07 | 0.02 | 0 |
| Comparative Example 1 | Single particle | ND | 0 | 1.00 | 0 | 0 |
| Comparative Example 2 | Agglomerated particle | ND | 0.33 | 0.33 | 0.33 | 0 |

[Table 2]

| | Composition | $D^{50}(\mu m)$ | $(D_{90}—D_{10})/D_{50}$ | $\alpha/\beta$ (L003/L104) |
|---|---|---|---|---|
| Example 1 | Ni/Co/Mn =50/20/30 | 10.86 | 1.16 | 1.10 |
| Example 2 | Ni/Co/Mn =55/20/25 | 3.52 | 0.91 | 1.89 |
| Example 3 | Ni/Co/Mn =55/20/25 | 5.41 | 0.90 | 1.94 |
| Example 4 | Ni/Co/Mn =88/8/4 | 5.79 | 1.78 | 1.84 |
| Example 5 | Ni/Co/Mn =88/8/4 | 3.32 | 6.32 | 1.94 |

(continued)

|  | Composition | $D^{50}(\mu m)$ | $(D_{90}-D_{10})/D_{50}$ | $\alpha/\beta$ (L003/L104) |
|---|---|---|---|---|
| Example 6 | Ni/Co/Mn =91/7/2 | 4.13 | 1.33 | 2.01 |
| Comparative Example 1 | Ni/Co/Mn =0/100/0 | 6.81 | 1.56 | 0.40 |
| Comparative Example 2 | Ni/Co/Mn =33/33/33 | 4.79 | 0.89 | 1.13 |

[Table 3]

|  | Composition | Determination |
|---|---|---|
| Example 1 | Ni/Co/Mn =50/20/30 | A |
| Example 2 | Ni/Co/Mn =55/20/25 | A |
| Example 3 | Ni/Co/Mn =55/20/25 | B |
| Example 4 | Ni/Co/Mn =88/8/4 | A |
| Example 5 | Ni/Co/Mn =88/8/4 | A |
| Example 6 | Ni/Co/Mn =91/7/2 | A |
| Comparative Example 1 | Ni/Co/Mn =0/100/0 | C |
| Comparative Example 2 | Ni/Co/Mn =33/33/33 | D |

[Table 4]

|  | Composition | Initial charge capacity (mAh/g) | Initial discharge capacity (mAh/g) |
|---|---|---|---|
| Example 1 | Ni/Co/Mn =50/20/30 | 188.0 | 161.1 |
| Example 2 | Ni/Co/Mn =55/20/25 | 200.6 | 176.9 |
| Example 3 | Ni/Co/Mn =55/20/25 | 193.3 | 163.0 |
| Example 4 | Ni/Co/Mn =88/8/4 | 230.0 | 195.5 |
| Example 5 | Ni/Co/Mn =88/8/4 | 227.1 | 192.8 |
| Example 6 | Ni/Co/Mn =91/7/2 | 232.8 | 193.4 |
| Comparative Example 1 | Ni/Co/Mn =0/100/0 | 173.3 | 170.9 |
| Comparative Example 2 | Ni/Co/Mn =33/33/33 | 189.5 | 164.5 |

As a result of the evaluation, all of the all-solid-state lithium-ion batteries using the positive electrode active materials of Examples 1 to 6 showed a high initial charge capacity, whereas the positive electrode active materials of Comparative Examples 1 and 2 had low initial charge capacities.

With regard to the positive electrode active materials of the examples and the comparative examples, when the liquid-based lithium-ion secondary batteries were evaluated, as shown in Table 4, all of the positive electrode active materials were evaluated as being usable favorably.

From the foregoing description, also in the case of all of the positive electrode active materials which work well in liquid-based lithium-ion secondary batteries, if the positive electrode active material is used for an all-solid-state lithium-ion battery, there is a large difference in battery performance and the positive electrode active material for an all-solid-state lithium-ion battery related to the present invention exhibits excellent battery performance.

From the foregoing description, the present invention is useful.

Reference Signs List

| | |
|---|---|
| 100 | Laminate |
| 110 | Positive electrode |
| 111 | Positive electrode active material layer |
| 112 | Positive electrode collector |
| 113 | External terminal |
| 120 | Negative electrode |
| 121 | Negative electrode electrolyte layer |
| 122 | Negative electrode collector |
| 123 | External terminal |
| 130 | Solid electrolyte layer |
| 200 | Exterior body |
| 200a | Opening portion |
| 1000 | All-solid-state lithium-ion battery |

**Claims**

1.  A positive electrode active material for an all-solid-state lithium-ion battery which includes particles including crystals of a lithium metal composite oxide,

    wherein the lithium metal composite oxide has a layered structure and includes at least Li and a transition metal, when particle diameters in which a cumulative proportion from a small particle side are 10%, 50%, and 90% with respect to a cumulative particle size distribution based on a volume measured through a laser diffraction type particle size distribution measurement are assumed to be D10, D50, and D90, the particles are formed so that a relational expression (D90—D10)/D50$\geq$0.90 holds, and
    the crystals are formed so that a ratio $\alpha/\beta$ between a crystallite size $\alpha$ at a peak in the range of $2\theta=18.7\pm2°$ and a crystallite size $\beta$ at a peak in the range of $2\theta=44.6\pm2°$ is 1.0 or more in an X-ray diffraction measurement using CuKa radiation.

2.  The positive electrode active material for an all-solid-state lithium-ion battery according to Claim 1, which is used for an all-solid-state lithium-ion battery including an oxide solid electrolyte.

3.  The positive electrode active material for an all-solid-state lithium-ion battery according to Claim 1 or 2, wherein the transition metal is at least one selected from the group consisting of Ni, Co, Mn, Ti, Fe, V, and W.

4.  The positive electrode active material for an all-solid-state lithium-ion battery according to Claim 3, wherein the lithium metal composite oxide is represented by the following Formula (1):

$$Li[Li_x(Ni_{(1-y-z-w)}Co_yMn_zM_w)_{1-x}]O_2 \qquad (1)$$

    (where M is at least one element selected from the group consisting of Fe, Cu, Ti, Mg, Al, W, B, Mo, Nb, Zn, Sn, Zr, Ga, and V and —0.10$\leq$x$\leq$0.30, 0<y$\leq$0.40, 0$\leq$z$\leq$0.40, and 0$\leq$w$\leq$0.10 are satisfied).

5.  The positive electrode active material for an all-solid-state lithium-ion battery according to Claim 4, wherein, in the foregoing Formula (1), 1—y—z—w$\geq$0.50 and y$\leq$0.30 are satisfied.

6.  The positive electrode active material for an all-solid-state lithium-ion battery according to any one of Claims 1 to 5, wherein the particles are composed of primary particles, secondary particles formed of agglomeration of the primary particles, and single particles present independently of the primary particles and the secondary particles, and the content of the single particles in the particles is 20% or more.

7.  The positive electrode active material for an all-solid-state lithium-ion battery according to any one of Claims 1 to 6, wherein the particles have a coated layer of a metal composite oxide on a surface of each of the particles.

8. An electrode, comprising:
   the positive electrode active material for an all-solid-state lithium-ion battery according to any one of Claims 1 to 7.

9. The electrode according to Claim 8, further comprising:
   a solid electrolyte.

10. An all-solid-state lithium-ion battery, comprising:

    a positive electrode;
    a negative electrode; and
    a solid electrolyte layer disposed between the positive electrode and the negative electrode,
    wherein the solid electrolyte layer includes a first solid electrolyte,
    the positive electrode includes a positive electrode active material layer in contact with the solid electrolyte layer
    and a current collector on which the positive electrode active material layer is laminated, and
    the positive electrode active material layer includes the positive electrode active material for an all-solid-state
    lithium-ion battery according to any one of Claims 1 to 7 or the electrode according to Claim 8 or 9.

11. The all-solid-state lithium-ion battery according to Claim 10, wherein the positive electrode active material layer
    includes the positive electrode active material for an all-solid-state lithium-ion battery and a second solid electrolyte.

12. The all-solid-state lithium-ion battery according to Claim 11, wherein the first solid electrolyte and the second solid
    electrolyte are formed of the same substance.

13. The all-solid-state lithium-ion battery according to any one of Claims 10 to 12, wherein the first solid electrolyte has
    a non-crystalline structure.

14. The all-solid-state lithium-ion battery according to any one of Claims 10 to 13, wherein the first solid electrolyte is
    an oxide solid electrolyte.

FIG. 1

FIG. 2

FIG. 3

## INTERNATIONAL SEARCH REPORT

| | International application No. |
|---|---|
| | PCT/JP2020/001480 |

### A. CLASSIFICATION OF SUBJECT MATTER

Int.Cl. H01M4/131(2010.01)i, H01M4/36(2006.01)i, H01M4/505(2010.01)i, H01M4/525(2010.01)i, H01M4/62(2006.01)i, H01M10/052(2010.01)i, H01M10/0562(2010.01)i, H01M10/0565(2010.01)i, H01M10/0585(2010.01)i
FI: H01M4/525, H01M4/505, H01M4/36Z, H01M4/36C, H01M4/131, H01M4/62Z, H01M10/0562, H01M10/052, H01M10/0585, H01M10/0565

According to International Patent Classification (IPC) or to both national classification and IPC

### B. FIELDS SEARCHED

Minimum documentation searched (classification system followed by classification symbols)
Int.Cl. H01M4/131, H01M4/36, H01M4/505, H01M4/525, H01M4/62, H01M10/052, H01M10/0562, H01M10/0565, H01M10/0585

Documentation searched other than minimum documentation to the extent that such documents are included in the fields searched
Published examined utility model applications of Japan   1922-1996
Published unexamined utility model applications of Japan   1971-2020
Registered utility model specifications of Japan   1996-2020
Published registered utility model applications of Japan   1994-2020

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y<br>A | WO 2015/182665 A1 (SUMITOMO CHEMICAL CO., LTD.) 03.12.2015 (2015-12-03), claims 1-10, paragraphs [0019]-[0105], examples 1-9 | 1, 3-6, 8, 10<br>7, 9, 11-13<br>2, 14 |
| X<br>Y<br>A | WO 2016/060105 A1 (SUMITOMO CHEMICAL CO., LTD.) 21.04.2016 (2016-04-21), claims 1-10, paragraphs [0019]-[0103], examples 1-14, 16, 17, 19, 20 | 1, 3-6, 8, 10<br>7, 9, 11-13<br>2, 14 |
| Y | WO 2007/004590 A1 (NATIONAL INSTITUTE FOR MATERIALS SCIENCE) 11.01.2007 (2007-01-11), paragraphs [0001]-[0048], examples | 7, 9, 11-13 |
| A | JP 2014-022204 A (HITACHI, LTD.) 03.02.2014 (2014-02-03) | 1-14 |

☒ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 29.01.2020 | 10.02.2020 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**INTERNATIONAL SEARCH REPORT**

International application No.

PCT/JP2020/001480

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2016-024916 A (TOYOTA MOTOR CORPORATION) 08.02.2016 (2016-02-08) | 1-14 |
| A | JP 2010-245038 A (IDEMITSU KOSAN CO., LTD.) 28.10.2010 (2010-10-28) | 1-14 |
| A | JP 2009-266728 A (TOYOTA MOTOR CORPORATION) 12.11.2009 (2009-11-12) | 1-14 |
| A | JP 2015-018678 A (TANAKA CHEMICAL CORP.) 29.01.2015 (2015-01-29) | 1-14 |
| A | CN 102544481 A (AMPEREX TECHNOLOGY LTD.) 04.07.2012 (2012-07-04) | 1-14 |

Form PCT/ISA/210 (second sheet) (January 2015)

INTERNATIONAL SEARCH REPORT
Information on patent family members

International application No.

PCT/JP2020/001480

| | | |
|---|---|---|
| WO 2015/182665 A1 | 03.12.2015 | US 2017/0187031 A1<br>claims 1-10, paragraphs [0020]-[0126],<br>examples 1-9<br>KR 10-2017-0009876 A<br>CN 106463721 A<br>EP 3151316 A1 |
| WO 2016/060105 A1 | 21.04.2016 | US 2017/0237069 A1<br>claims 1-10, paragraphs [0024]-[0146],<br>examples 1-14, 16, 17, 19, 20<br>KR 10-2017-0057450 A<br>CN 107078293 A<br>EP 3208872 A1 |
| WO 2007/004590 A1 | 11.01.2007 | US 2009/0081554 A1<br>paragraphs [0001]-[0049], examples |
| JP 2014-022204 A | 03.02.2014 | WO 2014/013837 A1 |
| JP 2016-024916 A | 08.02.2016 | (Family: none) |
| JP 2010-245038 A | 28.10.2010 | US 2012/0028128 A1<br>WO 2010/107084 A1 |
| JP 2009-266728 A | 12.11.2009 | WO 2009/133443 A1<br>KR 10-2010-0139095 A<br>EP 2272121 A1<br>US 2011/0045348 A1<br>CN 102017244 A |
| JP 2015-018678 A | 29.01.2015 | WO 2015/005180 A1<br>CN 105378987 A<br>KR 10-2016-0030090 A<br>EP 3021387 A1<br>US 2016/0372749 A1 |
| CN 102544481 A | 04.07.2012 | (Family: none) |

Form PCT/ISA/210 (patent family annex) (January 2015)

43

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019066770 A
- JP 2018014317 A

- JP 2002201028 A

**Non-patent literature cited in the description**

- **YOSHIO WASEDA ; EIICHIRO MATSUBARA.** X-ray structural analysis-determining arrangement of atoms. 30 April 2002